(19) 

Europäisches Patentamt

European Patent Office

Office européen des brevets

(11) **EP 4 512 935 A1**

(12) **EUROPEAN PATENT APPLICATION**
published in accordance with Art. 153(4) EPC

(43) Date of publication:
26.02.2025 Bulletin 2025/09

(21) Application number: 23795458.1

(22) Date of filing: 26.04.2023

(51) International Patent Classification (IPC):
*C25B 11/093* (2021.01)   *C25B 1/04* (2021.01)
*C25B 1/02* (2006.01)   *B01J 23/46* (2006.01)
*B01J 37/04* (2006.01)

(52) Cooperative Patent Classification (CPC):
B01J 23/46; B01J 37/04; C25B 1/02; C25B 1/04;
C25B 11/093

(86) International application number:
PCT/CN2023/090798

(87) International publication number:
WO 2023/208026 (02.11.2023 Gazette 2023/44)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.04.2022 CN 202210471486
28.04.2022 CN 202210471487
28.04.2022 CN 202210470970

(71) Applicants:
• **China Petroleum & Chemical Corporation
Beijing 100728 (CN)**
• **Sinopec Research Institute of Petroleum
Processing Co., Ltd.
Beijing 100083 (CN)**

(72) Inventors:
• **GU, Fangwei
Beijing 100083 (CN)**

• **CHENG, Yunlv
Beijing 100083 (CN)**
• **ZHENG, Lufan
Beijing 100083 (CN)**
• **ZHANG, Cong
Beijing 100083 (CN)**
• **MI, Wanliang
Beijing 100083 (CN)**
• **ZHAO, Xikang
Beijing 100083 (CN)**
• **GUO, Lin
Beijing 100083 (CN)**
• **SU, Qianqian
Beijing 100083 (CN)**

(74) Representative: **karo IP
Patentanwälte PartG mbB
Steinstraße 16-18
40212 Düsseldorf (DE)**

(54) **TRANSITION METAL-DOPED IRIDIUM-BASED COMPOSITE CATALYST, AND PREPARATION AND APPLICATION THEREOF**

(57) Disclosed are a transition metal-doped iridium-based composite catalyst and its preparation and use, wherein the catalyst is essentially composed of amorphous oxides of iridium and a transition metal, wherein the transition metal is selected from a metal of Group IVB, a metal of Group VB or a combination thereof, wherein, in terms of moles, the ratio of the content of iridium to the content of the transition metal in the catalyst is (0.4-0.7): (0.3-0.6), and in the XRD spectrum of the catalyst, there is no diffraction peak corresponding to Iridium oxide in rutile phase, and there is no diffraction peak corresponding to the crystalline phase of the oxide of the transition metal. The catalyst is in the form of a nano powder, has a uniform bulk structure, high catalytic activity and low usage amount of the precious metal iridium, and has excellent performance when applied to the anode of a proton exchange membrane water electrolyzer.

EP 4 512 935 A1

FIG.1

## Description

### Technical Field

The present application relates to a field of hydrogen production by electrolysis of water, and specifically to a transition metal-doped iridium-based composite catalyst and its preparation and use.

### Background Art

Hydrogen production technology by electrolysis of water is a relatively convenient method for producing hydrogen. Direct current is passed through an electrolyzer filled with electrolyte, and water molecules undergo electrochemical reactions on the electrodes, decomposing into hydrogen and oxygen. Compared with electrolysis technology of alkaline water, hydrogen production technology by proton exchange membrane (PEM) electrolysis of water has the advantages of faster response time, greater current density, wider working load range, and higher purity of produced hydrogen. Hydrogen production technology by electrolysis of water has unparalleled advantages in terms of the use of renewable energy for power generation, and can achieve the acquisition of green hydrogen.

The core component of the device for PEM electrolysis of water is the membrane electrode (MEA), which is usually composed of a proton exchange membrane, an anode catalyst layer and a cathode catalyst layer located on both sides of the proton exchange membrane, and an anode gas diffusion layer and a cathode gas diffusion layer located on the outermost side. The membrane electrode assembly is the place where the electrochemical reaction occurs. The characteristics and structure of the membrane electrode directly affect the performance and life of the PEM electrolyzer. In the membrane electrode, the anode catalyst is one of the key materials and the main rate-controlling step for hydrogen production by PEM electrolysis of water. At present, iridium oxide or iridium black catalyst is used in the anode catalyst layer of the membrane electrode of the commercial PEM electrolysis of water device, but there are limiting factors such as the scarcity of metal iridium resources, the high price (-1000 yuan/g), and the usage amount of Irin in the electrolyzer is higher than 2mg/cm$^2$. Therefore, reducing the usage amount of iridium in the anode catalyst is one of the important breakthroughs for the large-scale application of PEM electrolysis of water.

Existing literature indicates that the cost can be reduced by adding other types of cheaper metal oxides to the iridium oxide catalyst:

The preparation method of IrTi composite catalyst reported in a literature is mainly the Adams Fusion method (IrO2-TiO2: A High-Surface-Area, Active, and Stable Electrocatalyst for the Oxygen Evolution Reaction, ACS Catalysis, 2019, 9, 6974-6986.), the catalyst prepared by this method has obvious phase separation, and there are obvious $IrO_2$ and $TiO_2$ crystalline phase peaks in the XRD spectrum which leads to insufficient dispersion of iridium oxide and so reduces the utilization rate of the active component of iridium oxide.

The preparation methods of IrNb catalysts reported in a literature include thermal decomposition method (Effect of preparation procedure of IrO2-Nb2O5 anodes on surface and electrocatalytic properties, Journal of Applied Electrochemistry, 2005, 35, 925-924). This method uses hydrochloric acid as solvent, which is environmentally unfriendly; in addition, this method is only suitable for preparing catalyst films on high-temperature resistant substrates (Ti) and is not suitable for preparing powder catalysts.

One of the methods for preparing IrTa catalysts reported in a literature is a precipitation method (Preparation and evaluation of RuO2-IrO2, IrO2-Pt, IrO2-Ta2O5 catalysts for the oxygen evolution reaction in an SPE electrolyzer, Journal of Applied Electrochemistry, 2009, 39, 191-196). However, the catalyst prepared by the precipitation method has a certain loss of metal Ta, and is only suitable for the preparation of iridium-tantalum composite oxide catalysts with high Ir content (Ir/Ta molar ratio not less than 7:3), and the usage amount of precious metal is large. Another preparation method is the Adams Fusion method (Synthesis, characterization and evaluation of IrO2 based binary metal oxide electrocatalysts for oxygen evolution reaction, International Journal of Electrochemical Science, 2012, 7, 12064-12077). This method is also only suitable for the preparation of iridium-tantalum composite oxide catalysts with high Ir content (Ir/Ta molar ratio not less than 7:3), and the usage amount of precious metal is large.

However, how to simply, efficiently and uniformly dope metal compounds into iridium oxide catalysts while maintaining the original catalytic activity and stability of iridium oxide remains a technical difficulty that urgently needs to be solved in this field.

### Summary of the Invention

The objective of the present application is to provide a transition metal-doped iridium-based composite catalyst and its preparation and use. The catalyst is in the form of a nanopowder, has a uniform bulk structure, high catalytic activity and a low usage amount of precious metal iridium, and has excellent performance when used as an anode catalyst in proton exchange membrane electrolysis of water.

In order to achieve the above-mentioned objective, in one aspect, the present application provides a transition metal-doped iridium-based composite catalyst, which is essentially composed of amorphous iridium and transition metal oxide, and the transition metal is selected from a metal of Group IVB, a metal of Group VB or a combination thereof, wherein, on a molar basis, the content ratio of iridium to the transition metal in the catalyst is (0.4-0.7): (0.3-0.6), and in the XRD spectrum of the catalyst, there are no diffraction peaks corresponding to Iridium oxide in rutile phase, such as the (110) crystalline plane diffraction peak and the (101) crystalline plane diffraction peak of $IrO_2$, nor are there diffraction peak corresponding to the crystalline phase of the transition metal oxide.

Preferably, in the XRD spectrum of the catalyst, there is a peak envelope only in the $2\theta$ range of 10-70°.

In a further aspect, there is provided a method for preparing the iridium-based composite catalyst of the present application, comprising the following steps:

1) mixing an iridium source, a transition metal source, a complexing agent and a solvent, and reacting the resulting mixture at a pH of 6-10 to obtain reaction materials, wherein the transition metal is selected from a metal of Group IVB, a metal of Group VB and a combination thereof, and the complexing agent is selected from C3-C8 organic polyacids and soluble salts thereof, preferably selected from C4-C8 organic polyacids and soluble salts thereof;
2) evaporating and removing the solvent in the reaction materials obtained in step 1) to obtain an iridium-based composite catalyst precursor; and
3) calcining the iridium-based composite catalyst precursor in an oxygen-containing atmosphere to obtain the iridium-based composite catalyst.

In a yet further aspect, there is provided a use of the iridium-based composite catalyst according to the present application as an oxygen evolution electrocatalyst in an electrochemical process.

In a still further aspect, the present application provides a membrane electrode suitable for proton exchange membrane electrolysis of water, comprising a proton exchange membrane and a cathode catalyst layer and an anode catalyst layer respectively located on both sides of the proton exchange membrane, wherein the anode catalyst layer comprises the iridium-based composite catalyst of the present application.

The iridium-based composite catalyst of the present application is essentially composed of amorphous iridium and transition metal oxides, and the bulk structure is amorphous. There are no obvious crystalline diffraction peaks of iridium oxide and transition metal oxide in the XRD spectrum; iridium and transition metals are more homogeneously distributed in the catalyst, and the bulk structure is uniform, avoiding obvious phase separation; and the catalyst has low crystallinity and high specific surface area. When used as an anode catalyst for proton exchange membrane electrolysis of water to produce hydrogen, it has higher catalytic activity than commercial iridium oxide catalysts, and the usage amount of precious metal is significantly reduced, the cost is significantly reduced, and it has the value of expanding use.

In addition, in the method for preparing catalyst provided in the present application, a complexing agent is added to the iridium source and the transition metal source, so that the iridium source and the transition metal source are homogeneously dispersed in the mixed solution under the complexing action, thereby simply and effectively doping the amorphous transition metal oxide in the finally prepared catalyst to obtain an iridium-based composite catalyst with a uniform bulk structure; and the present application uses C3-C8 organic polyacids and their soluble salts, especially C4-C8 organic polyacids and their soluble salts as complexing agents, which can avoid precipitation in the solution. The reaction process does not use explosive raw materials such as sodium nitrate or highly corrosive solvents such as hydrochloric acid. There is no need to use a high-temperature resistant Ti substrate, and no harmful gases such as NOx are emitted during calcination. The preparation method is simple to operate, the conditions are mild, the manufacturing cost is lower, and the preparation process is more environmentally friendly.

Other characteristics and advantages of the present application will be described in detail in the subsequent specific embodiment section.

## Brief Description of Figures

The figures are used to provide a further understanding of the present application and constitute a part of the specification. Together with the following specific embodiments, they are used to explain the present application but do not constitute a limitation to the present application. In the figures:

Fig. 1 is a high-resolution transmission electron microscopy spectrum of the catalyst product obtained in Example I-3;
Fig. 2 is XRD spectra of the catalyst products obtained in Examples I-1 to I-4 and the catalysts in Comparative Examples I-1 and I-2;
Fig. 3 is an Ir 4f XPS spectrum of the catalyst product obtained in Example I-3;
Fig. 4 is an XRD spectrum of the product obtained in Example II-1;
Fig. 5 is an XRD spectrum of the product obtained in Comparative Example II-2;

Fig. 6 is an XPS spectrum of the product obtained in Example II-1;
Fig. 7 is a TEM spectrum of the product obtained in Example II-1;
Fig. 8A is an XRD spectrum of the catalyst product obtained in Example III-1;
Fig. 8B is an XRD spectrum of the catalyst product obtained in Comparative Example III-2;
Fig. 9 is an XPS spectrum of the catalyst product obtained in Example III-1; and
Fig. 10 is a TEM spectrum of the catalyst product obtained in Example III-1.

## Detailed Description of the Invention

The specific embodiments of the present application are described in detail below in conjunction with the figures. It should be understood that the specific embodiments described here are only used to illustrate and explain the present application, and is not used to limit the present application.

Any specific numerical value disclosed herein (including the endpoint of the numerical range) is not limited to the exact value of the numerical value, but should be understood to also cover values close to the exact value, such as all possible values within the range of $\pm 5\%$ of the exact value. In addition, for the disclosed numerical range, the endpoint values of the range, the endpoint values and the specific point values in the range, and the specific point values can be arbitrarily combined to obtain one or more new numerical ranges, and these new numerical ranges should also be regarded as specifically disclosed herein.

Unless otherwise specified, the terms used herein have the same meaning as commonly understood by those skilled in the art. If a term is defined herein and its definition is different from the commonly understood meaning in the art, the definition herein shall prevail.

In the present application, "satisfies the principle of electrical neutrality" means that the algebraic sum of the valences of all elements in the corresponding chemical formula is zero.

In this application, "peak envelope" in the XRD spectrum refers to other forms of protrusions that appear in the XRD spectrum in addition to the obvious and sharp characteristic peaks conventionally considered by those skilled in the art. The "peak envelope" generally has the characteristics of low intensity and large width. Usually, the position of the peak envelope can only be expressed as a $2\theta$ range, and no accurate peak position can be determined like a crystalline phase peak. By combining the intensity, width and peak envelope position, it can be determined that the peak envelope corresponds to an amorphous oxide, rather than the characteristic peak of a crystalline oxide.

In the present application, the chemical composition of the catalyst is only used as a schematic representation, which can be determined by X-ray fluorescence analysis (XRF analysis) and is consistent with the addition ratio of relevant metal raw materials during preparation.

In the present application, the molar ratio of Ir to transition metal measured by XPS analysis (denoted as $M_1$) refers to the ratio of the peak area of Ir to the peak area of the transition metal element in the XPS spectrum, which can characterize the molar ratio of iridium to transition metal element at the catalyst surface (usually within the range of about 1-2 nm thickness of the outer surface); the molar ratio of Ir to transition metal measured by XRF analysis (denoted as $M_2$) refers to the ratio of the peak area of Ir to the peak area of the transition metal element in the XRF spectrum, which can characterize the molar ratio of iridium to transition metal element in the entire bulk structure of the catalyst. Obviously, when $M_1/M_2$ (denoted as $M_0$) is greater than 1, it indicates that the relative content of iridium element at the catalyst surface is higher than the overall relative content of iridium element in the bulk structure, indicating that the catalyst surface is rich in iridium.

In this application, the "particle size" of the catalyst particles refers to the particle size measured by transmission electron microscopy. For example, "the particle size of the catalyst particles is 2-10 nm" means that the particle size of each particle of the catalyst in the transmission electron microscopy spectrum is within the range of 2-10 nm.

In the present application, the term "essentially composed of..." means that in addition to the mentioned components, the total content of other components in the catalyst is less than 10%, such as less than 5%, less than 4%, less than 3%, less than 2%, less than 1% or less than 0.5%.

In the present application, except for the contents clearly stated, any matters or items not mentioned are directly applicable to the aspects known in the art without any modifications. Moreover, any embodiment described herein can be freely combined with one or more other embodiments described herein, and the technical solutions or technical ideas formed thereby are deemed to be part of the original disclosure or original record of the present application, and should not be regarded as new contents not disclosed or anticipated herein, unless a person skilled in the art considers that the combination is obviously unreasonable.

All patent and non-patent literatures, including but not limited to textbooks and journal articles, mentioned herein are incorporated herein by reference in their entirety.

As described above, in the first aspect, the present application provides a transition metal-doped iridium-based composite catalyst, which is essentially composed of amorphous iridium and transition metal oxide, wherein the transition metal is selected from a metal of Group IVB, a metal of Group VB or a combination thereof, wherein, on a molar basis, the ratio of the content of iridium to the content of the transition metal in the catalyst is (0.4-0.7) : (0.3-0.6).

The iridium-based composite catalyst of the present application is essentially composed of amorphous iridium and transition metal oxides, and the bulk structure is amorphous. There are no obvious crystalline diffraction peaks of iridium oxide and transition metal oxide in the XRD spectrum; iridium and the transition metal are more homogeneously distributed in the catalyst, and the bulk structure is uniform, avoiding obvious phase separation. For example, in some specific embodiments, in the XRD spectrum of the catalyst, there are no diffraction peaks corresponding to Iridium oxide in rutile phase, i.e., the (110) crystalline plane diffraction peak (2θ is about 28.027) and the (101) crystalline plane diffraction peak (2θ is about 34.7) of $IrO_2$, nor are there diffraction peaks corresponding to the crystalline phase of the transition metal oxide, such as the diffraction peaks corresponding to the crystalline phase of the titanium oxide (for $TiO_2$: the 2θ of the diffraction peaks are 27.446, 36.085, 39.187, 41.225, 44.05, 54.322, 56.64, 62.74, 64.038, 65.478, 69.008, 69.788), the diffraction peaks corresponding to the crystalline phase of the niobium oxide (for $Nb_2O_5$: the 2θ of the diffraction peaks are 18.201, 23.707, 24.921, 26.426, 32.053, 35.743, 38.783, 43.915, 47.568, 51.283, 53.886, 54.581, 58.355, 67.306) and the diffraction peaks corresponding to the crystalline phase of the tantalum oxide (for $Ta_2O_5$: the 2θ of the diffraction peaks are 23.478, 24.585, 26.466, 29.365, 30.001, 36.665, 39.966, 40.339, 46.458, 47.995).

In a preferred embodiment, the XRD spectrum of the catalyst has a peak envelope only in the 2θ range of 10-70°, more preferably, has a peak envelope only in the 2θ range of 20-50°.

In a preferred embodiment, the iridium-based composite catalyst of the present application has a chemical composition as shown in the following formula: $Ir_xM_{1-x}O_y$, wherein M represents the transition metal, x is in the range of 0.4-0.7, and the value of y is such that the above chemical formula satisfies the principle of electrical neutrality. Further preferably, the transition metal M is selected from titanium (Ti), niobium (Nb), tantalum (Ta) or a combination thereof.

In a preferred embodiment, the Ir 4f characteristic peak of the XPS spectrum of the catalyst includes an Ir(IV) characteristic peak and an Ir(III) characteristic peak, and the catalyst satisfies: the peak area of the Ir(III) characteristic peak of the XPS spectrum of the catalyst is denoted as $Q_1$, the peak area of the Ir(IV) characteristic peak is denoted as $Q_2$, $Q_1/(Q_1+Q_2)$ is denoted as $Q_0$, and $Q_0$ is in the range of 0.2-0.6.

In a preferred embodiment, the catalyst is in the form of nanoparticle powder, the particle size of the powder particles is in the range of 1-10 nm, and preferably the BET specific surface area of the powder particles is in the range of 50-80 $m^2$/g. Further preferably, the proportion of micropore volume to total pore volume in the catalyst particles is 0-5%, preferably 0-3%.

In the second aspect, there is provided a method for preparing an iridium-based composite catalyst (particularly the iridium-based composite catalyst of the present application), comprising the following steps:

1) mixing an iridium source, a transition metal source, a complexing agent and a solvent, and reacting the resulting mixture at a pH of 6-10 to obtain reaction materials, wherein the transition metal is selected from a metal of Group IVB, a metal of Group VB and a combination thereof, and the complexing agent is selected from C3-C8 organic polyacids and soluble salts thereof, preferably selected from C4-C8 organic polyacids and soluble salts thereof;
2) evaporating and removing the solvent in the reaction materials obtained in step 1) to obtain an iridium-based composite catalyst precursor; and
3) calcining the iridium-based composite catalyst precursor in an oxygen-containing atmosphere to obtain the iridium-based composite catalyst.

In a preferred embodiment, the iridium source is selected from chloroiridic acid, alkali metal chloroiridates or a combination thereof; further preferably, the alkali metal chloroiridates are selected from potassium chloroiridate, sodium chloroiridate or a combination thereof. According to the present application, the chloroiridic acid and its soluble salts may or may not contain water of crystallization, generally containing water of crystallization (such as compounds represented by the formula $H_2IrCl_6 \cdot 6H_2O$ or $(NH_4)_2IrCl_6 \cdot 6H_2O$).

In a preferred embodiment, the transition metal source can be selected from a titanium source, a niobium source, a tantalum source or a combination thereof; further preferably, the titanium source is selected from a soluble titanium salt, particularly preferably selected from titanium sulfate, titanium oxysulfate or a combination thereof, the niobium source is an alcohol-soluble niobium compound, particularly preferably selected from niobium pentachloride, ammonium niobate oxalate hydrate or a combination thereof, and the tantalum source is an alcohol-soluble tantalum compound, particularly preferably tantalum pentachloride.

In the method of the present application, there is no particular restriction on the organic polyacids and its soluble salt used as the complexing agent. From the perspective of industrial application, those C3-C8 organic polyacids and their soluble salts with lower cost and abundant sources are preferred, especially C4-C8 organic polyacids and their soluble salts. In a preferred embodiment, the complexing agent is selected from citric acid, tartaric acid, malic acid, sodium citrate, sodium malate, sodium tartrate, or a combination thereof. In the method of the present application, the above complexing agents are used, and no precipitation occurs in the mixed solution.

In a preferred embodiment, the molar ratio of the iridium source calculated as iridium to the transition metal source calculated as transition metal is 0.5-2.5:1, preferably 1-2.3:1; and the molar ratio of the complexing agent to the total amount of the iridium source and the transition metal source is 1-4:1, more preferably 1.3-3:1.

In the present application, there is no strict limitation on the solvent used in step 1), as long as it can dissolve the reaction raw materials used and does not adversely affect the reaction. In certain preferred embodiments, the solvent used in step 1) is selected from water, alcohols or a combination thereof.

In certain preferred embodiments, the step 1) further comprises:

1A) mixing the iridium source, the first complexing agent and water to obtain a first mixture;

1B) mixing the transition metal source, the second complexing agent and an organic solvent to obtain a second mixture, wherein the organic solvent is miscible with water and has a boiling point ranging from room temperature to 120 °C, and is preferably an alcohol solvent;

1C) adjusting the pH of the first mixture and the second mixture to 6-10 respectively; and

1D) mixing the first mixture with the second mixture after pH adjustment in step 1C), and further adjusting the pH of the obtained mixture to 6-10, and then obtaining the reaction materials through reaction;

wherein the first complexing agent and the second complexing agent may be the same or different, and are each independently selected from C3-C8 organic polyacids and soluble salts thereof, preferably selected from C4-C8 organic polyacids and soluble salts thereof, and more preferably selected from citric acid, tartaric acid, malic acid, sodium citrate, sodium tartrate, sodium malate, or a combination thereof.

In a further preferred embodiment, the molar ratio of the first complexing agent to the iridium source calculated as iridium is 1-4:1, preferably 1.7-3:1, the molar ratio of the second complexing agent to the transition metal source calculated as transition metal is 1-4:1, preferably 1.5-3.2:1, and the molar ratio of the iridium source calculated as iridium to the transition metal source calculated as transition metal is 1-2.5:1, preferably 1.2-2:1.

In a preferred embodiment, the reaction conditions in step 1) include: temperature of 25-95°C, preferably 40-90°C, and time of 0.5-6h, preferably 2-4h.

In a preferred embodiment, the reaction in step 1) is carried out at a pH of 8-9. Specifically, when the first complexing agent and the second complexing agent are used, the pH is preferably adjusted to 8-9 when the pH is adjusted respectively in step 1C).

In the method of the present application, when the pH value needs to be adjusted or controlled in any step, the pH can be adjusted by adding a pH adjuster, and the pH adjuster is preferably selected from sodium carbonate, sodium bicarbonate, sodium hydroxide, ammonia water, or a combination thereof.

In the method of the present application, in step 2), the solvent in the reaction materials obtained in step 1) can be evaporated and removed by conventional methods in the art, for example, the solvent can be removed by vacuum distillation and/or rotary evaporation. In a specific embodiment, the evaporation/distillation temperature and time used can be easily determined according to the selected solvent and evaporation/distillation method, and will not be described in detail here.

In step 3) of the method of the present application, calcination is carried out under aerobic conditions, such as calcination in air or oxygen atmosphere, which can remove organic matter in the precursor and is also conducive to the formation of the catalyst pore structure. If calcination is carried out under nitrogen, the catalytic effect of the catalyst is adversely affected. In a preferred embodiment, the oxygen-containing atmosphere used in step 3) can be pure oxygen or a mixed gas with an oxygen content of more than 20% by weight, such as air.

In a preferred embodiment, the calcination conditions in step 3) include: a calcination temperature of 350-550°C, preferably 370-450°C; and a calcination time of 1-4h, preferably 1.5-3h.

In a preferred embodiment, the method of the present application further comprises the step of washing the calcined product of step 3), wherein the solvent used for washing is water, alcohol, or a mixed solution of alcohol and water. Further preferably, a mixed solution of alcohol and water is used for washing, wherein the alcohol accounts for 10-95% by weight of the mass of the mixed solution, preferably 30-60% by weight, so that it is easier to separate the catalyst by centrifugation. Further preferably, the alcohol is selected from alcohols having 1-3 carbon atoms, preferably selected from methanol, ethanol, n-propanol, isopropanol, or a combination thereof. In a further preferred embodiment, the catalyst is washed until the pH of the liquid phase after washing is neutral or no chloride ions are detectable.

In certain further preferred embodiments, the method of the present application further comprises a drying step after washing. The inventors of the present application have found that the catalyst can be dried above room temperature when washed with water, but it is difficult to completely separate the catalyst by centrifugation when washed with water; and if alcohol is used partially or completely for washing, drying above room temperature will reduce the catalytic performance of the catalyst. Therefore, preferably, the drying temperature is below 10°C, preferably -30°C -10°C, and more preferably below 0°C.

In the third aspect, there is provided an iridium-based composite catalyst prepared by the method of the present application.

In the fourth aspect, there is provided a use of the iridium-based composite catalyst of the present application as an oxygen evolution electrocatalyst in an electrochemical process.

According to the present application, the electrochemical process includes but is not limited to an oxygen evolution reaction process in an acidic environment or an alkaline environment.

In the fifth aspect, there is provided a membrane electrode suitable for proton exchange membrane electrolysis of water, comprising a proton exchange membrane and a cathode catalyst layer and an anode catalyst layer respectively located on both sides of the proton exchange membrane, wherein the anode catalyst layer comprises the iridium-based composite catalyst of the present application.

In a preferred embodiment, the membrane electrode further includes a cathode diffusion layer and an anode diffusion layer located at the outermost side. In this case, the membrane electrode includes a cathode diffusion layer, a cathode catalyst layer, a proton exchange membrane, an anode catalyst layer and an anode diffusion layer in sequence from the cathode side to the anode side.

The membrane electrode provided in the present application has a structure conventionally used in the art, and the other components and materials involved therein except the anode catalyst layer can be those conventionally used in the art, or prepared by methods known in the art. For example, the proton exchange membrane may be Nafion 115 or Nafion 117 membrane produced by DuPont, the cathode catalyst layer may be Pt/C or platinum black, the cathode diffusion layer may be titanium felt, porous titanium or carbon paper, and the anode diffusion layer may be titanium felt or porous titanium.

According to the present application, the membrane electrode can be prepared by conventional methods known in the art, and the present application has no strict restrictions on this. For example, the catalyst layer components can be formulated as ink or slurry, which contains aqueous and/or organic solvents, optional polymer binders and optional proton-conducting polymers, and the ink or slurry can be deposited on the proton exchange membrane using conventional techniques such as spraying, printing and doctor blade methods.

In the sixth aspect, there is provided a proton exchange membrane water electrolyzer, comprising the membrane electrode of the present application, and a cathode end plate and an anode end plate respectively located on both sides of the membrane electrode.

The proton exchange membrane water electrolyzer provided in the present application has a structure conventionally used in the art, and other components and materials involved therein except for the membrane electrode may be those conventionally used in the art, which will not be described in detail here.

The first type of embodiments

According to the first type of embodiments of the present application, the iridium-based composite catalyst is an iridium-titanium composite catalyst, which is essentially composed of amorphous oxides of iridium and titanium, wherein, on a molar basis, the content ratio of iridium to titanium in the catalyst is (0.4-0.7) : (0.3-0.6), and in the XRD spectrum of the catalyst, there is a peak envelope only in the $2\theta$ range of 30-35°.

In the iridium-titanium composite catalyst according to the first type of embodiments of the present application, the iridium element and the titanium element essentially are present in the form of amorphous oxides, the bulk structure is amorphous, and there is no obvious crystal diffraction peak in the XRD spectrum; iridium and titanium are more homogeneously distributed in the catalyst, and the bulk structure is uniform, avoiding obvious phase separation; and the catalyst surface is rich in iridium, and when used as an anode catalyst for proton exchange membrane electrolysis of water to produce hydrogen, it has higher catalytic activity than commercial iridium oxide catalysts, and the usage amount of precious metal is significantly reduced.

In a specific embodiment, the XRD spectrum of the iridium-titanium composite catalyst does not have the (110) crystalline plane diffraction peak and the (101) crystalline plane diffraction peak of $IrO_2$, nor does it have the corresponding diffraction peak of titanium oxide crystalline phase. The absence of the above two individual crystalline plane diffraction peaks of $IrO_2$ indicates that the iridium-titanium composite catalyst does not contain Iridium oxide in rutile phase, which further illustrates that the bulk phase structure of the catalyst is uniform.

In a preferred embodiment, the iridium-titanium composite catalyst has a chemical composition represented by the formula $Ir_xTi_{1-x}O_y$, wherein x is in the range of 0.4-0.7, and the value of y is such that the above chemical formula satisfies the principle of electrical neutrality.

In a preferred embodiment, the iridium-titanium composite catalyst has the following characteristics: the Ir/Ti molar ratio of the iridium-titanium composite catalyst measured by XPS analysis is denoted as $M_1$, the Ir/Ti molar ratio of the iridium-titanium composite catalyst measured by XRF analysis is denoted as $M_2$, and the ratio of $M_1/M_2$ is denoted as $M_0$, then $M_0$ is in the range of 1.25-1.55. Obviously, at this time, the relative content of the iridium element at the surface of the iridium-titanium composite catalyst is higher than the overall relative content of the iridium element in the bulk structure, indicating that the catalyst surface is rich in iridium. The inventors of the present application have found through a large number of experiments that when the iridium-titanium composite catalyst satisfies $M_0$ within the above preferred range, the catalyst can obtain higher catalytic activity under the condition of low content of precious metal iridium.

In a preferred embodiment, the Ir 4f characteristic peak of the XPS spectrum of the iridium-titanium composite catalyst includes an Ir(IV) characteristic peak and an Ir(III) characteristic peak, and the iridium-titanium composite catalyst has the following characteristics: the peak area of the Ir(III) characteristic peak of the XPS spectrum of the iridium-titanium composite catalyst is denoted as $Q_1$, the peak area of the Ir(IV) characteristic peak of the XPS spectrum is denoted as $Q_2$, $Q_1/(Q_1+Q_2)$ is denoted as $Q_0$, and $Q_0$ is in the range of 0.35-0.41. The inventors of the present application have found in experiments that when the iridium-titanium composite catalyst satisfies $Q_0$ within the above preferred range, a certain amount of Ir(III) active species is present in the surface of the composite catalyst, so that the catalyst has a lower overpotential and a higher oxygen evolution activity.

In certain preferred embodiments, the iridium-titanium composite catalyst is in the form of nanoparticle powder, with a particle size of 2-10 nm, preferably 4-7 nm, and a BET specific surface area in the range of 50-80 $m^2/g$.

According to the first type of embodiments of the present application, the method for preparing the iridium-titanium composite catalyst comprises the following steps:

1) mixing an iridium source, a titanium source, a complexing agent and water, adjusting the pH of the mixture to 6-10, and reacting them to obtain reaction materials, wherein the complexing agent is selected from C3-C8 organic polyacids and soluble salts thereof, preferably selected from C4-C8 organic polyacids and soluble salts thereof;

2) removing water from the reaction materials obtained in step 1) by evaporation to obtain an iridium-titanium composite catalyst precursor; and

3) calcining the iridium-titanium composite catalyst precursor in an oxygen-containing atmosphere to obtain the iridium-titanium composite catalyst.

The inventor of the present application has found through experiments that, in the process of preparing the catalyst, adding a complexing agent to the iridium source and the titanium source can make the iridium source and the titanium source dispersed homogeneously under the complexing action, thereby obtaining an iridium-titanium composite catalyst with a uniform bulk structure. In addition, mixing C3-C8 organic polyacids and their soluble salts, particularly C4-C8 organic polyacids and their soluble salts, as complexing agents with the iridium source and the titanium source can also avoid precipitation. In addition, the above-mentioned preparation method is simple to operate, mild in conditions, does not use explosive raw materials such as sodium nitrate in the reaction process, does not emit harmful gases such as $NO_x$ during calcination, has lower manufacturing costs and is more environmentally friendly in the process.

In a preferred embodiment, the titanium source is selected from soluble titanium salts, more preferably selected from titanium sulfate, titanium oxysulfate or a combination thereof.

In a preferred embodiment, the molar ratio of the iridium source to the titanium source is 0.5-2.5:1, preferably 1-2.3:1; the total molar ratio of the complexing agent to the iridium source and the titanium source is 1-2:1, preferably 1.3-1.8:1.

In a preferred embodiment, the reaction conditions in step 1) include: a temperature of 35-95°C, a time of 0.5-6h; preferably, a temperature of 50-90°C, a time of 2-4h.

In a preferred embodiment, the reaction in step 1) is carried out at a pH of 8-9.

In a preferred embodiment, the calcination conditions in step 3) include: a calcination temperature of 350-400°C, preferably 370-385°C; and a calcination time of 1-3h, preferably 1.5-2h.

The second type of embodiments

According to the second embodiment of the present application, the iridium-based composite catalyst is an iridium-niobium composite catalyst, which is essentially composed of amorphous oxides of iridium and niobium, wherein, on a molar basis, the content ratio of iridium to niobium in the catalyst is (0.5-0.7) : (0.3-0.5), and in the XRD spectrum of the catalyst, there is a peak envelope only in the 20 range of 25-40°.

In the iridium-niobium composite catalyst according to the second type of embodiments of the present application, the iridium and niobium elements are essentially present in the form of amorphous oxides, and there is no obvious crystal diffraction peak in the XRD spectrum; the iridium and niobium are homogeneously distributed in the catalyst, and the bulk structure is uniform; and the catalyst has low crystallinity and high specific surface area. When used as an anode catalyst for proton exchange membrane electrolysis of water to produce hydrogen, it has higher catalytic activity than the commercial iridium oxide catalysts, and the usage amount of precious metals is significantly reduced, the cost is significantly reduced, and it has the value of expanding use.

In a specific embodiment, the XRD spectrum of the iridium-niobium composite catalyst does not have the (110) crystalline plane diffraction peak and the (101) crystalline plane diffraction peak of $IrO_2$, nor does it have the diffraction peak corresponding to niobium oxide crystalline phase. The absence of the above two individual crystalline plane diffraction peaks of IrO2 indicates that the iridium-niobium composite catalyst does not contain Iridium oxide in rutile phase, which further illustrates that the bulk phase structure of the catalyst is uniform.

In a preferred embodiment, the iridium-niobium composite catalyst has a chemical composition represented by the formula $Ir_xNb_{1-x}O_y$, wherein x is in the range of 0.5-0.7, preferably in the range of 0.62-0.67, and the value of y is such that the above chemical formula satisfies the principle of electrical neutrality.

In a preferred embodiment, the iridium-niobium composite catalyst has the following characteristics: the Ir/Nb molar ratio of the iridium-niobium composite catalyst measured by XPS analysis is denoted as $M_1$, the Ir/Nb molar ratio of the iridium-niobium composite catalyst measured by XRF analysis is denoted as $M_2$, the ratio of $M_1/M_2$ is denoted as $M_0$, and $M_0$ is in the range of 0.99-1.02. Obviously, at this time, the relative content of iridium element at the surface of the iridium-niobium composite catalyst is consistent with the overall relative content of iridium element in the bulk structure.

In a preferred embodiment, the Ir 4f characteristic peak of the XPS spectrum of the iridium-niobium composite catalyst includes an Ir(IV) characteristic peak and an Ir(III) characteristic peak, and the iridium-niobium composite catalyst has the following characteristics: the peak area of the Ir(III) characteristic peak of the XPS spectrum of the iridium-niobium composite catalyst is denoted as $Q_1$, the peak area of the Ir(IV) characteristic peak of the XPS spectrum is denoted as $Q_2$, $Q_1/(Q_1+Q_2)$ is denoted as $Q_0$, and $Q_0$ is in the range of 0.50-0.54. The inventors of the present application have found in experiments that when the iridium-niobium composite catalyst satisfies $Q_0$ within the above preferred range, a certain amount of Ir(III) active species is present in the surface of the composite catalyst, so that the iridium-niobium composite catalyst has a low overpotential and a higher oxygen evolution activity.

In certain preferred embodiments, the iridium-niobium composite catalyst is in the form of nanoparticle powder, the BET specific surface area of the catalyst particles is 71-75 $m^2/g$, and the particle size is 1-5 nm, preferably 2-4 nm.

According to the second type of embodiments of the present application, the method for preparing the iridium-niobium composite catalyst comprises the following steps:

1) mixing an iridium source, a niobium source, a complexing agent and a solvent, adjusting the pH of the mixture to 6-10, and reacting them to obtain reaction materials, wherein the complexing agent is selected from C3-C8 organic polyacids and soluble salts thereof, preferably selected from C4-C8 organic polyacids and soluble salts thereof;

2) removing the solvent in the reaction materials obtained in step 1) by evaporation to obtain an iridium-niobium composite catalyst precursor; and

3) calcining the iridium-niobium composite catalyst precursor in an oxygen-containing atmosphere to obtain the iridium-niobium composite catalyst.

In the preparation method of the present application, a complexing agent is mixed with an iridium source and a niobium source to improve the uniformity of dispersion of the iridium source and the niobium source in the mixed solution; and C3-C8 organic polyacids and their soluble salts, especially C4-C8 organic polyacids and their soluble salts, are used as complexing agents to avoid precipitation in the solution. The reaction process does not use highly corrosive solvents such as hydrochloric acid, and does not require a high-temperature resistant Ti substrate. The preparation method is simple to operate and has mild conditions.

In a preferred embodiment, the step 1) further comprises the following steps:

1A) mixing the iridium source, the first complexing agent and water to obtain a first mixture;

1B) mixing the niobium source, the second complexing agent and the organic solvent to obtain a second mixture;

1C) adjusting the pH of the first mixture and the second mixture to 6-10 respectively; and

1D) mixing the first mixture with the second mixture after pH adjustment in step 1C), and further adjusting the pH of the obtained mixture to 6-10, and then obtaining the reaction materials through reaction;

wherein the first complexing agent and the second complexing agent may be the same or different, and are each independently selected from C3-C8 organic polyacids and soluble salts thereof, preferably selected from C4-C8 organic polyacids and soluble salts thereof.

In a further preferred embodiment, the organic solvent comprises alcohol, such as methanol, ethanol, isopropanol, etc.

In a preferred embodiment, the niobium source is an alcohol-soluble niobium compound, and is further preferably selected from niobium pentachloride, ammonium niobate oxalate hydrate, or a combination thereof.

In a preferred embodiment, the first complexing agent and the second complexing agent may be the same or different, and are each independently selected from citric acid, tartaric acid, malic acid, sodium citrate, sodium tartrate, sodium malate, or a combination thereof.

In a preferred embodiment, the molar ratio of the first complexing agent to the iridium source calculated as iridium is 1-4:1, preferably 2-3:1; the molar ratio of the second complexing agent to the niobium source calculated as niobium is 1-4:1, preferably 1.5-2.5:1; further preferably, the molar ratio of the iridium source calculated as iridium to the niobium source calculated as niobium is 1-2.33:1, preferably 1.7-2:1.

In a preferred embodiment, the reaction conditions in step 1) include: a temperature of 45-85°C, preferably 60-70°C; a reaction time of 2-6 h, preferably 3-4 h.

In a preferred embodiment, the reaction in step 1) is carried out at a pH of 8-9. Specifically, when the first complexing agent and the second complexing agent are used, the pH is preferably adjusted to 8-9 when the pH is adjusted respectively in step 1C).

In the method of the present application, the aqueous solution of the iridium source and the alcohol solution of the niobium source are preferably prepared under alkaline conditions. Compared with acidic solutions, alkaline conditions can make the catalytic effect of the finally prepared iridium-niobium composite catalyst better.

In a preferred embodiment, the calcination conditions in step 3) include: a calcination temperature of 350-550°C, preferably 380-450°C; and a calcination time of 1-3 h, preferably 1-2 h.

The third type of embodiments

According to the third type of embodiments of the present application, the iridium-based composite catalyst is an iridium-tantalum composite catalyst, which is essentially composed of amorphous oxides of iridium and tantalum, wherein, on a molar basis, the content ratio of iridium to tantalum in the catalyst is (0.5-0.7): (0.3-0.5), and in the XRD spectrum of the catalyst, there are peak envelopes only in the 2θ range of 25-35° and 40-41°.

In the iridium-tantalum composite catalyst according to the third type of embodiments of the present application, the iridium element and the tantalum element are essentially present in the form of amorphous oxides. The iridium oxide and the tantalum oxide are fully mixed to form a uniform amorphous structure without obvious crystallization phenomenon, which is beneficial to improve the catalytic activity and stability of the catalyst. The composite catalyst can also effectively reduce the usage amount of iridium and save costs.

In a specific embodiment, the XRD spectrum of the iridium-tantalum composite catalyst does not have the (110) crystalline plane diffraction peak and the (101) crystalline plane diffraction peak of $IrO_2$, nor does it have the diffraction peak corresponding to the crystalline phase of tantalum oxide. The absence of the above two individual crystalline plane diffraction peaks of $IrO_2$ indicates that the iridium-tantalum composite catalyst does not contain Iridium oxide in rutile phase, which further illustrates that the two elements are homogeneously mixed in the catalyst bulk phase.

In a preferred embodiment, the iridium-tantalum composite catalyst has a chemical composition represented by the formula $Ir_xTa_{1-x}O_y$, wherein x is in the range of 0.5-0.7, preferably in the range of 0.55-0.66, and the value of y is such that the above chemical formula satisfies the principle of electrical neutrality.

In a preferred embodiment, the iridium-tantalum composite catalyst has the following characteristics: the Ir/Ta molar ratio of the iridium-tantalum composite catalyst measured by XPS analysis is denoted as $M_1$, the Ir/Ta molar ratio of the iridium-tantalum composite catalyst measured by XRF analysis is denoted as $M_2$, the ratio of $M_1/M_2$ is denoted as $M_0$, and $M_0$ is in the range of 0.98-1.04. Obviously, at this time, the relative content of iridium element at the surface of the iridium-tantalum composite catalyst is consistent with the overall relative content of iridium element in the bulk structure.

In a preferred embodiment, the Ir 4f characteristic peak of the XPS spectrum of the iridium-tantalum composite catalyst includes an Ir(IV) characteristic peak and an Ir(III) characteristic peak, and the iridium-tantalum composite catalyst has the following characteristics: the peak area of the Ir(III) characteristic peak of the XPS spectrum of the iridium-tantalum composite catalyst is denoted as $Q_1$, the peak area of the Ir(IV) characteristic peak of the XPS spectrum is denoted as $Q_2$, $Q_1/(Q_1+Q_2)$ is denoted as $Q_0$, and $Q_0$ is in the range of 0.22-0.27. The inventors of the present application have found in experiments that when the iridium-tantalum composite catalyst satisfies $Q_0$ within the above preferred range, a certain amount of Ir(III) active species is present in the surface of the composite catalyst, so that the iridium-tantalum composite catalyst has a low overpotential and a higher oxygen evolution activity.

In certain preferred embodiments, the iridium-tantalum composite catalyst is in the form of nanoparticle powder, and the BET specific surface area of the catalyst particles is 50-70 m$^2$/g; and the particle size is 2-7 nm.

According to the third type of embodiments of the present application, the method for preparing the iridium-tantalum composite catalyst comprises the following steps:

1) mixing an iridium source, a tantalum source, a complexing agent and a solvent, adjusting the pH of the mixture to 6-10, and reacting them to obtain reaction materials, wherein the complexing agent is selected from C3-C8 organic polyacids and soluble salts thereof, preferably selected from C4-C8 organic polyacids and soluble salts thereof;
2) removing the solvent in the reaction materials obtained in step 1) by evaporation to obtain an iridium-tantalum composite catalyst precursor; and
3) calcining the iridium-tantalum composite catalyst precursor in an oxygen-containing atmosphere to obtain the iridium-tantalum composite catalyst.

The method of the present application has a simple process and mild conditions. The utilization of C3-C8 organic polyacids and soluble salts thereof, especially C4-C8 organic polyacids and soluble salts thereof as complexing agents can improve the mixing uniformity of the iridium source and the tantalum source, which is beneficial to the preparation of a composite catalyst with amorphous structure in which iridium oxide and tantalum oxide are uniformly mixed. The method can also achieve high utilization rates of iridium atoms and tantalum atoms (the atomic utilization rate reaches 100%), high production efficiency, and can reduce the usage amount of precious metal Ir. No waste gas such as $NO_x$ is emitted during the preparation process, which is green and environmentally friendly.

In a preferred embodiment, the step 1) further comprises the following steps:

1A) mixing the iridium source, the first complexing agent and water to obtain a first mixture;

1B) mixing the tantalum source, the second complexing agent and the organic solvent to obtain a second mixture;

1C) adjusting the pH of the first mixture and the second mixture to 6-10 respectively; and

1D) mixing the first mixture with the second mixture after pH adjustment in step 1C), and further adjusting the pH of the obtained mixture to 6-10, and then obtaining the reaction materials through reaction;

wherein the first complexing agent and the second complexing agent may be the same or different, and are each independently selected from C3-C8 organic polyacids and soluble salts thereof, preferably selected from C4-C8 organic polyacids and soluble salts thereof.

In a further preferred embodiment, the organic solvent comprises an alcohol.

In a preferred embodiment, the tantalum source is an alcohol-soluble tantalum compound, more preferably tantalum pentachloride.

In a preferred embodiment, the first complexing agent and the second complexing agent may be the same or different, and are each independently selected from citric acid, tartaric acid, malic acid, sodium citrate, sodium tartrate, sodium malate, or a combination thereof.

In a preferred embodiment, the molar ratio of the first complexing agent to the iridium source calculated as iridium is 1-4:1, preferably 1.7-2.4:1; the molar ratio of the second complexing agent to the tantalum source calculated as tantalum is 1-4:1, preferably 2.0-3.2:1; further preferably, the molar ratio of the iridium source calculated as iridium to the tantalum source calculated as tantalum is 1-2.33:1, preferably 1.22-1.94:1.

In a preferred embodiment, the reaction conditions in step 1) include: a temperature of 25-75°C, preferably 40-60°C; a reaction time of 0.5-6 h, preferably 3-4 h.

In a preferred embodiment, the reaction in step 1) is carried out at a pH of 8-9. Specifically, when the first complexing agent and the second complexing agent are used, the pH is preferably adjusted to 8-9 when the pH is adjusted respectively in step 1C).

In the method of the present application, it is preferred to prepare the aqueous solution of the iridium source and the alcohol solution of the tantalum source under alkaline conditions. Compared with acidic solutions, alkaline conditions can make the catalytic effect of the finally prepared iridium tantalum catalyst better.

In a preferred embodiment, the calcination conditions in step 3) include: a calcination temperature of 350-450°C, preferably 370-400°C; and a calcination time of 2-4 hours, preferably 2.5-3 hours.

In some particularly preferred embodiments, the present application provides the following technical solutions:

A1. An iridium-titanium composite catalyst, characterized in that it comprises amorphous oxides of iridium and titanium, and the XRD spectrum of the iridium-titanium composite catalyst shows an amorphous peak envelope only at 30-35°.

A2. The iridium-titanium composite catalyst according to item A1, characterized in that the iridium-titanium composite catalyst has the following characteristics:

the Ir/Ti molar ratio of the iridium-titanium composite catalyst measured by XPS analysis is denoted as $M_1$;

the Ir/Ti molar ratio of the iridium-titanium composite catalyst measured by XRF analysis is denoted as $M_2$;

$M_0$ defined by the following formula (1) is any value between 1.20 and 1.55;

$$M0 = M_1/M_2 \quad \text{Formula (1).}$$

A3. The iridium-titanium composite catalyst according to item A1, characterized in that the particle size of the iridium-titanium composite catalyst is 2-10 nm;

optionally, the chemical composition of the iridium-titanium composite catalyst is $Ir_xTi_{1-x}O_2$, wherein x is any value between 0.4 and 0.7.

A4. The iridium-titanium composite catalyst according to item A1, characterized in that the XRD spectrum of the iridium-titanium composite catalyst does not have a diffraction peak of the (110) crystalline plane of $IrO_2$, nor does have a diffraction peak of the (101) crystalline plane of $IrO_2$.

A5. The iridium-titanium composite catalyst according to item A1, characterized in that the Ir 4f characteristic peaks of the XPS spectrum of the iridium-titanium composite catalyst include an Ir(IV) characteristic peak and an Ir(III) characteristic peak, and the iridium-titanium composite catalyst has the following characteristics:

the peak area of the Ir(III) characteristic peak in the XPS spectrum of the iridium-titanium composite catalyst is denoted as $Q_1$;
the peak area of the Ir(IV) characteristic peak in the XPS spectrum of the iridium-titanium composite catalyst is denoted as $Q_2$;
$Q_0$ defined by the following formula (2) is any value between 0.35 and 0.41;

$$Q_0 = Q_1/(Q_1+Q_2) \qquad \text{Formula (2).}$$

A6. A method for preparing an iridium-titanium composite catalyst, characterized in that the method comprises the following steps:

1) mixing an iridium source, a titanium source, a complexing agent and water, adjusting the pH of the mixture to 6-10, and obtaining a first material through reaction, wherein the complexing agent is selected from C3-C8 organic polyacids and soluble salts thereof, preferably selected from C4-C8 organic polyacids and soluble salts thereof;
2) separating water from the first material to obtain an iridium-titanium composite catalyst precursor;
3) calcining the iridium-titanium composite catalyst precursor in an oxygen-containing atmosphere.

A7. The method according to item A6, characterized in that the iridium source is selected from one or more of chloroiridic acid and alkali metal chloroiridates; preferably, the alkali metal chloroiridates are selected from one or more of potassium chloroiridate and sodium chloroiridate;

the titanium source is selected from soluble titanium salts, preferably one or two selected from titanium sulfate and titanium oxysulfate;
the complexing agent is selected from one or more of citric acid, tartaric acid, malic acid, sodium citrate, sodium tartrate and sodium malate;
preferably, the molar ratio of the iridium source calculated as iridium to the titanium source calculated as titanium is 0.5-2.5:1, preferably 1-2.3:1;
further preferably, the total molar ratio of said complexing agent to the iridium source and titanium source is 1-2:1, preferably 1.3-1.8:1.

A8. The method according to item A6, characterized in that the reaction conditions in step 1) include: a temperature of 35 - 95°C, a time of 0.5 - 6h; preferably, a temperature of 50 - 90°C, a time of 2 - 4h;

optionally, in step 1), the pH is 8-9;
optionally, a pH adjuster is added to adjust the pH; optionally, the pH adjuster is selected from one or more of sodium carbonate, sodium bicarbonate, sodium hydroxide and ammonia water.

A9. The method according to item A6, characterized in that in step 3), the conditions of the calcination treatment include: a calcination temperature of 350-400°C, preferably 370-385°C; and a calcination time of 1-3h, preferably 1.5-2h.

A10. The method according to item A6, characterized in that the method further comprises: a step of washing the product obtained by the calcination treatment; the solvent used in the washing treatment is a mixed solution of alcohol and water, and the alcohol accounts for 10-95% by weight, preferably 30-60% by weight of the mass of the mixed solution;

preferably, the alcohol is selected from one or more of methanol, ethanol, n-propanol and isopropanol.

A11. An iridium-titanium composite catalyst prepared by the method according to any one of items A6 to A10.

A12. Use of the iridium-titanium composite catalyst according to any one of items A1 to A5 and item A11 as an oxygen evolution electrocatalyst in electrochemistry.

A13. A proton exchange membrane water electrolyzer, comprising a proton exchange membrane, a cathode catalyst layer, an anode catalyst layer, a cathode diffusion layer and an anode diffusion layer, characterized in that the anode catalyst layer adopts the iridium-titanium composite catalyst according to any one of items A1 to A5 and item A12.

B1. An iridium-niobium composite catalyst, characterized in that it comprises amorphous oxides of iridium and niobium, and the XRD spectrum of the iridium-niobium composite catalyst shows an amorphous peak envelope only at 25-40°.

B2. The iridium-niobium composite catalyst according to item B1, characterized in that the iridium-niobium composite catalyst has the following characteristics:

the Ir/Nb molar ratio of the iridium-niobium composite catalyst measured by XPS analysis is denoted as $M_1$;
the Ir/Nb molar ratio of the iridium-niobium composite catalyst measured by XRF analysis is denoted as $M_2$;
$M_0$ defined by the following formula (1) is any value between 0.99 and 1.02;

$$M_0 = M_1/M_2 \quad \text{Formula (1)}.$$

B3. The iridium-niobium composite catalyst according to item B1, characterized in that the Ir 4f characteristic peaks of the XPS spectrum of the iridium-niobium composite catalyst include Ir(IV) characteristic peaks and Ir(III) characteristic peaks, and the iridium-niobium composite catalyst has the following characteristics:

the peak area of the Ir(III) characteristic peak of the XPS spectrum of said iridium-niobium composite catalyst is denoted as Q1;
the peak area of the Ir(IV) characteristic peak of the XPS spectrum of said iridium-niobium composite catalyst is denoted as Q2;
$Q_0$ as defined in equation (2) below is any value between 50 - 54%;

$$Q_0 = Q_1/(Q_1+Q_2) \times 100\% \quad \text{Formula (2)}.$$

B4. The iridium-niobium composite catalyst according to item B1, characterized in that the chemical composition of the iridium-niobium composite catalyst is as shown in the following formula (A):

$$Ir_xNb_{1-x}O_{2.5-0.5x} \quad \text{Formula (A)};$$

wherein x is any value between 0.5 and 0.7; preferably, x is any value between 0.62 and 0.67;
preferably, the iridium-niobium composite catalyst comprises iridium-niobium composite catalyst particles, and the iridium-niobium composite catalyst particles have a BET specific surface area of 71-75 $m^2$/g and a particle size of 1-5 nm.

B5. The iridium-niobium composite catalyst according to item B1, characterized in that the XRD spectrum of the iridium-niobium composite catalyst does not have a diffraction peak of the (110) crystalline plane of $IrO_2$, and nor does have a diffraction peak of the (101) crystalline plane of $IrO_2$.

B6. A method for preparing an iridium-niobium composite catalyst, characterized in that the method comprises the following steps:

1) mixing an iridium source, a niobium source, a complexing agent and a solvent, adjusting the pH of the mixture to 6-10, and obtaining a raw materials mixture through reaction, wherein the complexing agent is selected from C3-C8 organic polyacids and soluble salts thereof, preferably selected from C4-C8 organic polyacids and soluble salts thereof;
2) separating the solvent from the raw materials mixture to obtain an iridium-niobium composite catalyst precursor;
3) calcining the iridium-niobium composite catalyst precursor in an oxygen-containing atmosphere.

B7. The method according to item B6, characterized in that step 1) comprises the following steps:

1A) performing a first mixing of the iridium source, the first complexing agent and water to obtain a first mixture;
1B) performing a second mixing of the niobium source, the second complexing agent and an organic solvent to obtain a second mixture;
1C) adjusting the pH of the first mixture and the second mixture to 6-10 respectively;
1D) mixing the first mixture with the second mixture after pH adjustment in step 1C) to conduct reaction, and adjusting the pH to 6-10 to obtain the raw materials mixture;
wherein the first complexing agent and the second complexing agent are the same or different, and are each independently selected from C3-C8 organic polyacids and soluble salts thereof, preferably selected from C4-C8 organic polyacids and soluble salts thereof;
optionally, the organic solvent comprises alcohol.

B8. The method according to item B7, characterized in that the iridium source is selected from one or more of chloroiridic acid and alkali metal chloroiridates; preferably, the alkali metal chloroiridates are selected from one or two of potassium chloroiridate and sodium chloroiridate;

the niobium source is selected from one or two of niobium pentachloride and ammonium niobate oxalate hydrate; the first complexing agent and the second complexing agent are the same or different, and are each independently selected from one or more of citric acid, tartaric acid, malic acid, sodium citrate, sodium tartrate and sodium malate;

preferably, the molar ratio of said first complexing agent to the iridium source calculated as iridium is 1-4:1, preferably 2-3:1;

preferably, the molar ratio of the second complexing agent to the niobium source calculated as niobium is 1-4:1, preferably 1.5-2.5:1;

preferably, the molar ratio of the iridium source calculated as iridium to the niobium source calculated as niobium is 1-2.33:1, preferably 1.7-2 :1.

B9. The method according to item B6, characterized in that the conditions for carrying out the reaction in step 1) include: a temperature of 45-85°C, preferably 60-70°C; a reaction time of 2-6h, preferably 3-4h;

preferably, in step 1), the pH is 8-9;

optionally, a pH adjuster is added to adjust the pH, optionally, the pH adjuster is selected from one or more of sodium carbonate, sodium bicarbonate, sodium hydroxide and ammonia water.

B10. The method according to item B6, characterized in that in step 3), the conditions of the calcination treatment include: a calcination temperature of 350-550°C and a calcination time of 1-3h.

B11. The method according to item B6, characterized in that the method further comprises: a step of washing the product obtained by the calcination treatment; the solvent used in the washing treatment is a mixed solution of alcohol and water, and the alcohol accounts for 10-95% by weight of the mass of the mixed solution, preferably 30-60% by weight;

preferably, the alcohol is selected from one or more of methanol, ethanol, n-propanol and isopropanol.

B12. An iridium-niobium composite catalyst prepared by the method according to any one of items B6 to B11.

B13. Use of the iridium-niobium composite catalyst according to any one of items B1 to B5 and item B12 as an oxygen evolution electrocatalyst in electrochemistry.

B14. A proton exchange membrane water electrolyzer, comprising a proton exchange membrane, a cathode catalyst layer, an anode catalyst layer, a cathode diffusion layer and an anode diffusion layer, characterized in that the anode catalyst layer adopts the iridium-niobium composite catalyst according to any one of items B1 to B5 and item B12.

C1. An iridium-tantalum composite catalyst, characterized in that it comprises amorphous oxides of iridium and tantalum, and the XRD spectrum of the iridium-tantalum composite catalyst has peak envelopes only at 25-35° and 40-41°.

C2. The iridium-tantalum composite catalyst according to item C1, characterized in that the XRD spectrum of the iridium-titanium composite catalyst does not have a diffraction peak of the (110) crystalline plane of $IrO_2$, nor does have a diffraction peak of the (101) crystalline plane of $IrO_2$.

C3. The iridium-tantalum composite catalyst according to item C1, characterized in that said iridium-tantalum composite catalyst has a chemical composition as shown in following formula (1):

$$Ir_xTa_{1-x}O_{2.5-0.5x} \qquad \text{Formula (1)};$$

wherein x is any value between 0.5 and 0.7;
preferably, x is any value between 0.55 and 0.66.

C4. The iridium-tantalum composite catalyst according to item C1, characterized in that the iridium-tantalum composite catalyst has the following characteristics:

the Ir/Ta molar ratio of the iridium-tantalum composite catalyst measured by XPS analysis is denoted as $M_1$;
the Ir/Ta molar ratio of the iridium-tantalum composite catalyst measured by XRF analysis is denoted as $M_2$;
$M_0$ defined by the following formula (2) is any value between 0.98 and 1.04:

$$M_0 = M_1/M_2 \quad \text{Formula (2)}.$$

C5. The iridium-tantalum composite catalyst according to item C1, characterized in that the Ir 4f characteristic peaks of the XPS spectrum of the iridium-tantalum composite catalyst include Ir(IV) characteristic peaks and Ir(III) characteristic peaks, and the iridium-tantalum composite catalyst has the following characteristics:

the peak area of the Ir(III) characteristic peak in the XPS spectrum of the iridium-tantalum composite catalyst is denoted as Q1;
the peak area of the Ir(IV) characteristic peak in the XPS spectrum of the iridium-tantalum composite catalyst is denoted as Q2;
$Q_0$ defined by the following formula (3) is any value between 0.22 and 0.27;

$$Q_0=Q_1/(Q_1+Q_2) \qquad \text{Formula (3)}.$$

C6. The iridium-tantalum composite catalyst according to item C1, characterized in that the iridium-tantalum composite catalyst comprises iridium-tantalum composite catalyst particles, and the iridium-tantalum composite catalyst particles have a BET specific surface area of 50-70 m$^2$/g and a particle size of 2-7 nm.

C7. A method for preparing an iridium-tantalum composite catalyst, characterized in that the method comprises the following steps:

1) mixing an iridium source, a tantalum source, a complexing agent and a solvent, adjusting the pH of the mixture to 6-10, and reacting them to obtain reaction materials, wherein the complexing agent is selected from one or more of C3-C8 organic polyacids and soluble salts thereof, preferably selected from one or more of C4-C8 organic polyacids and soluble salts thereof;
2) separating the solvent from the reaction materials to obtain an iridium-tantalum composite catalyst precursor;
3) calcining the iridium-tantalum composite catalyst precursor in an oxygen-containing atmosphere.

C8. The method according to item C7, characterized in that step 1) comprises the following steps:

1A) performing a first mixing of the iridium source, the first complexing agent and water to obtain a first mixture;
1B) performing a second mixing of the tantalum source, the second complexing agent and the organic solvent to obtain a second mixture;
1C) adjusting the pH of the first mixture and the second mixture to 6-10 respectively;
1D) mixing the first mixture with the second mixture after pH adjustment in step 1C), adjusting the pH to 6-10, and then obtaining the reaction materials through reaction;
wherein the first complexing agent and the second complexing agent are the same or different, and are each independently selected from one or more of C3-C8 organic polyacids and soluble salts thereof, preferably selected from one or more of C4-C8 organic polyacids and soluble salts thereof;
optionally, the organic solvent comprises alcohol.

C9. The method according to item C8, characterized in that the iridium source is selected from one or more of chloroiridic acid and alkali metal chloroiridates; preferably, the alkali metal chloroiridates are selected from one or two of potassium chloroiridate and sodium chloroiridate;

the tantalum source includes tantalum pentachloride;
the first complexing agent and the second complexing agent are the same or different, and are each independently selected from one or more of citric acid, tartaric acid, malic acid, sodium citrate, sodium tartrate and sodium malate;
preferably, the molar ratio of the first complexing agent to the iridium source calculated as iridium is 1-4:1, more preferably 1.7-2.4:1;
preferably, the molar ratio of the second complexing agent to the tantalum source calculated as tantalum is 1-4:1, more preferably 2.0-3.2:1;
preferably, the molar ratio of the iridium source calculated as iridium to the tantalum source calculated as tantalum is 1-2.33:1, more preferably 1.22-1.94:1.

C10. The method according to item C7, characterized in that the conditions for carrying out the reaction in step 1) include: a temperature of 25-75°C, preferably 40-60°C; a reaction time of 0.5-6h, preferably 3-4h;

preferably, in step 1), the pH is 8-9;
optionally, a pH adjuster is added to adjust the pH, optionally, the pH adjuster is selected from one or more of sodium carbonate, sodium bicarbonate, sodium hydroxide and ammonia water.

C11. The method according to item C7, characterized in that in step 3), the conditions for the calcination treatment include: a calcination temperature of 350-450°C, preferably 370-400°C; a calcination time of 2-4h, preferably 2.5-3h;

optionally, the method further comprises: a step of washing the product obtained by the calcination treatment; the solvent used in the washing treatment is a mixed solution of alcohol and water, and the alcohol accounts for 10-95% by weight of the mixed solution, preferably 30-60% by weight;
preferably, the alcohol is selected from one or more of methanol, ethanol, n-propanol and isopropanol.

C12. Iridium-tantalum composite catalyst prepared by the method according to any one of items C7-11.
C13. Use of the iridium-tantalum composite catalyst according to any one of items C1-6 and C12 as an oxygen evolution electrocatalyst in electrochemistry.
C14. A proton exchange membrane water electrolyzer, comprising a proton exchange membrane, a cathode catalyst layer, an anode catalyst layer, a cathode diffusion layer and an anode diffusion layer, characterized in that the anode catalyst layer adopts the iridium-tantalum composite catalyst according to any one of items C1-6 and item C12.

## Example

The present application is described in detail below in connection with specific examples. The following examples will help those skilled in the art to further understand the present application, but will not limit the present application in any form.

**The instruments and testing methods used in the following examples and comparative examples are as follows:**

The model of the X-ray Fluorescence Spectrometer (XRF) is Rigaku 3013 X-ray fluorescence spectrometer, and the analysis test conditions of X-ray fluorescence spectrometry are as follows: scanning time is 100s, and the atmosphere is air.
The elements in the surface of the material are detected by X-ray photoelectron spectroscopy (XPS). The X-ray photoelectron spectroscopy analyzer used is an ESCALab220i-XL type X-ray electron spectrometer equipped with Avantage V5.926 software and produced by VG Scientific company. The test conditions of X-ray photoelectron spectroscopy analysis are as follows: the excitation source is monochromatic A1K$\alpha$ X-ray, the power is 330W, and the basic vacuum during the analysis test is $3\times10^{-9}$ mbar. In addition, the electron binding energy is corrected by using the C1s peak (284.3eV) of elemental carbon.
The model of high-resolution transmission electron microscope (HRTEM) is JEM-2100 (HRTEM) (JEOL Ltd.), and the test conditions of the HRTEM are as follows: the accelerating voltage is 200 kV.
BET test method: the pore structure properties of the samples are determined by a Quantachrome AS-6B analyzer, and the specific surface area was obtained by the Brunauer-Emmett-Taller (BET) method.
X-ray diffraction analysis (XRD) is carried out on a Shimadzu XRD-6000 X-ray diffractometer of Japan; the test conditions include: a tube voltage of 40 kV, a tube current of 40 mA, Cu target Ko radiation, and 20 scanning range of 5° to 80°.
The overpotential is measured by using the following equipment and method: the model of electrochemical workstation is PARSTAT3000A-DX, and the model of rotating disk electrode is 636A. A three-electrode system is used, with a saturated calomel electrode as the reference electrode, a platinum sheet as the counter electrode, and a glassy carbon electrode as the working electrode. The electrolyte used under acidic conditions is a 0.5 M $H_2SO_4$ solution. The catalyst to be tested is ultrasonically uniformly dispersed in a mixed solution of isopropanol, water, and Nation, and then dropped onto the surface of the glassy carbon electrode; the working electrode is obtained after natural drying, and the catalyst loading is 0.38 mg/cm$^2$. The test temperature is 25 °C, and oxygen is passed through the solution for 30 minutes before the test to saturate the solution with oxygen. The rotation speed is 2500 rpm, the scanning range of the linear polarization curve is 1.2-1.5 V (vs RHE), and the scanning rate is 5 mV/s. The voltage in the linear polarization curve after scanning is corrected by the reference electrode and the ohmic internal resistance of the solution to obtain the corrected voltage. The current is corrected by the background current and area normalized to obtain the corrected current and current density. The voltage corresponding to the current density of 10mA/cm$^2$ is selected from the corrected polarization curve. The voltage value minus the theoretical value (1.23V) is the overpotential of the catalyst.
The molar ratios of O in the schematic chemical compositions of the resulting catalysts in the following examples and comparative examples ratios are approximations calculated in the cases that Ir and Ti are 4-valent and Nb and Ta are 5-valent.

**Examples I series**

The following Example I series is used to illustrate the preparation and application of the iridium-titanium composite catalyst according to the present application. The raw materials used in the Example I series were all obtained through commercial channels, and were analytically pure unless otherwise specified. The chloroiridic acid raw material was in liquid form, and the mass fraction of Ir was 35 % by weight. For ease of use, it was prepared into a solution with a mass concentration of 0.182 mol/L for use, and could also be prepared into a solution with a higher concentration for use. The purity of titanium sulfate was 96 % by weight; the purity of citric acid was analytically pure.

**Example I-1. Preparation of Catalyst $Ir_{0.4}Ti_{0.6}O_2$**

(1) 20 mL (3.64 mmol) of chloroiridic acid aqueous solution was taken, 1.36 g (5.44 mmol) of titanium sulfate was weighed, 2.63 g (13.7 mmol) of citric acid was weighed, they were stirred at 90°C to fully mix chloroiridic acid, titanium sulfate and citric acid, a certain amount of $Na_2CO_3$ was added to adjust the solution to about pH=8; wherein the molar ratio of the iridium source calculated as iridium to the titanium source calculated as titanium was 0.669:1, and the total molar ratio of the complexing agent to the iridium source and the titanium source was 1.5:1;
(2) the solution in step (1) was continued to be stirred for half an hour, and then a certain amount of sodium carbonate solution was added to control the pH of the solution to 8-9, and then stirred for another 3 hours;
(3) after being cooled, the solution was spin-dried at 70°C and placed in an oven at 120°C for drying overnight;
(4) after the catalyst was taken out and cooled, it was ground and placed flat on a porcelain boat; in an oxygen atmosphere, the temperature was increased to 380°C at a rate of 5°C /min and maintained for 2 h.
(5) after being cooled to room temperature, the catalyst was washed with a 1:1 solvent mixture of ethanol and water and centrifuged three times (pH test paper detection showed to be neutral), the washed catalyst was ultrasonically dispersed in an aqueous solution, and dried in a forced air drying oven (60°C) overnight. The resulting catalyst product was denoted as CAT-I-1.

From XRF test analysis, it could be seen that the schematic chemical composition of CAT-I-1 was $Ir_{0.40}Ti_{0.60}O_2$.
TEM test analysis showed that the particle size of CAT-I-1 was 5-10nm.

**Example I-2. Preparation of catalyst $Ir_{0.5}Ti_{0.5}O_2$**

(1) 20 mL (3.64 mmol) of chloroiridic acid aqueous solution was taken, 0.91 g (3.64 mmol) of titanium sulfate was weighed, 2.10 g (10.92 mmol) of citric acid was weighed, they were stirred at 90°C to fully mix chloroiridic acid, titanium sulfate and citric acid, a certain amount of $Na_2CO_3$ was added to adjust the solution to about pH=8; wherein the molar ratio of the iridium source calculated as iridium to the titanium source calculated as titanium was 1:1, and the total molar ratio of the complexing agent to the iridium source and the titanium source was 1.5:1;
(2) the solution in step (1) was continued to be stirred for half an hour, and then a certain amount of sodium carbonate solution was added hereinto to control the pH of the solution to 8-9, and the solution was stirred for another 3 hours;
(3) after being cooled, the solution was spin-dried at 70°C and placed in an oven at 120°C for drying overnight;
(4) after the catalyst was taken out and cooled, it was ground and placed flat on a porcelain boat, in an oxygen atmosphere, the temperature was increased to 380°C at a rate of 5°C /min and maintained for 2 h;
(5) after being cooled to room temperature, the catalyst was washed with a 1:1 solvent mixture of ethanol and water and centrifuged three times (pH test paper detection showed to be neutral); the washed catalyst was ultrasonically dispersed in an aqueous solution, and placed in a forced air drying oven (60°C) to be dried overnight. The resulting catalyst product was denoted as CAT-I-2.

From XRF test analysis, it could be seen that the schematic chemical composition of CAT-I-2 was $Ir_{0.50}Ti_{0.50}O_2$.
TEM test analysis showed that the particle size of CAT-I-2 was 3-8nm.

**Example I-3. Preparation of Catalyst $Ir_{0.6}Ti_{0.4}O_2$**

(1) 20 mL (3.64 mmol) of chloroiridic acid aqueous solution was taken, 0.61 g (2.44 mmol) of titanium sulfate was weighed, 1.75 g (9.1 mmol) of citric acid was weighed, they were stirred at 90°C to fully mix chloroiridic acid, titanium sulfate and citric acid, a certain amount of $Na_2CO_3$ was added to adjust the solution to about pH=8; wherein the molar ratio of the iridium source calculated as iridium to the titanium source calculated as titanium was 1.5:1, and the total molar ratio of the complexing agent to the iridium source and the titanium source was 1.5:1;

(2) the solution in step (1) was continued to be stirred for half an hour, and then a certain amount of sodium carbonate solution was added hereinto to control the pH of the solution to 8-9, and then stirred for another 3 hours;

(3) after cooling, the solution was spin-dried at 70°C and placed in an oven at 120°C for drying overnight;

(4) after the catalyst was taken out and cooled, it was ground and laid flat on a porcelain boat, in an oxygen atmosphere, the temperature was increased to 380°C at a rate of 5°C /min and maintained for 2 h;

(5) after being cooled to room temperature, the catalyst was washed with a 1:1 solvent mixture of ethanol and water and centrifuged three times (pH test paper detection showed to be neutral); the washed catalyst was ultrasonically dispersed in an aqueous solution, and placed in a forced air drying oven (60°C) to be dried overnight. The obtained catalyst product was denoted as CAT-I-3.

From XRF test analysis, it could be seen that the schematic chemical composition of CAT-I-3 was $Ir_{0.60}Ti_{0.40}O_2$.

TEM test analysis showed that the particle size of CAT-I-3 was 2-5nm.

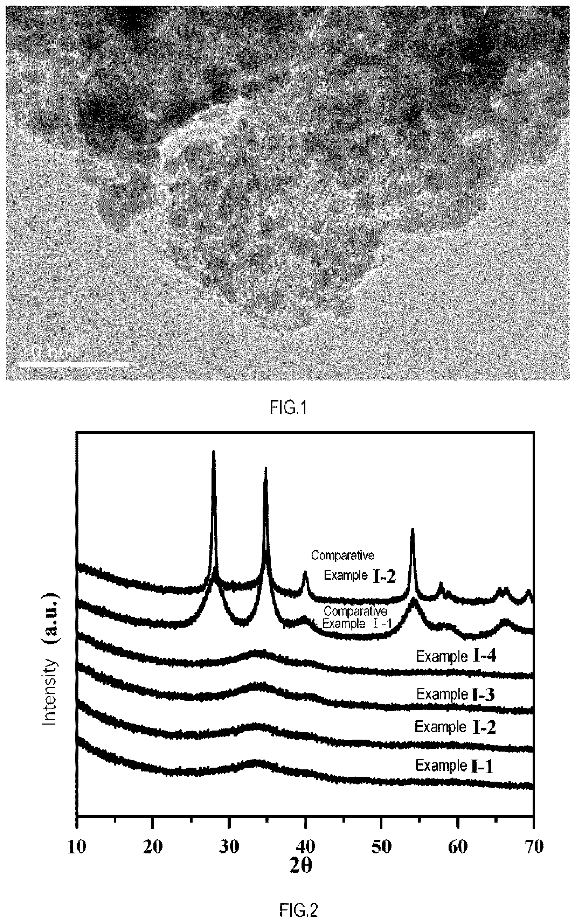

The high-resolution transmission electron microscopy spectrum of the resulting catalyst CAT-I-3 is shown in Fig. 1, from which it can be seen that the catalyst particles provided in the present application are uniform in size and the particle size can reach nanometer size.

## Example I-4. Preparation of Catalyst $Ir_{0.7}Ti_{0.3}O_2$

(1) 20 mL (3.64 mmol) of chloroiridic acid aqueous solution was taken, 0.39 g (1.56 mmol) of titanium sulfate was weighed, 1.50 g (7.8 mmol) of citric acid was weighed, they were stirred at 90°C to fully mix chloroiridic acid, titanium sulfate and citric acid, a certain amount of $Na_2CO_3$ was added to adjust the solution to about pH=8; wherein the molar ratio of the iridium source calculated as iridium to the titanium source calculated as titanium was 2.33:1, and the total molar ratio of the complexing agent to the iridium source and the titanium source was 1.5:1;

(2) the solution in step (1) was continued to be stirred for half an hour, and then a certain amount of sodium carbonate solution was added to control the pH of the solution to 8-9, and then stirred for another 3 hours;

(3) after being cooled, the solution was spin-dried at 70°C and placed in an oven at 120°C for drying overnight;

(4) after the catalyst was taken out and cooled, it was ground and placed flat on a porcelain boat, in an oxygen atmosphere, the temperature was increased to 380°C at a rate of 5°C/min and maintained for 2 h;

(5) after being cooled to room temperature, the catalyst was washed with a 1:1 solvent mixture of ethanol and water and centrifuged three times (pH test paper detection showed to be neutral), the washed catalyst was ultrasonically dispersed in an aqueous solution, and placed in a forced air drying oven (60°C) to be dried overnight. The obtained catalyst product was denoted as CAT-I-4.

From XRF test analysis, it could be seen that the schematic chemical composition of CAT-I-4 was $Ir_{0.70}Ti_{0.30}O_2$.

TEM test analysis showed that the particle size of CAT-I-4 was 3-7nm.

## Example 1-5. Preparation of Catalyst $Ir_{0.54}Ti_{0.46}O_2$

The catalyst was prepared by referring to Example I-4, except that:
20 mL (3.64 mmol) of chloroiridic acid aqueous solution was taken, 0.78 g (3.12 mmol) of titanium sulfate was weighed, 1.94 g (10.11) mmol of citric acid was weighed, the molar ratio of iridium source calculated as iridium to titanium source calculated as titanium was 1.17:1, and the total molar ratio of complexing agent to iridium source and titanium source was 1.5:1. The rest of the process was the same as Example I-4. The obtained catalyst product was denoted as CAT-I-5.

From XRF test analysis, it could be seen that the schematic chemical composition of CAT-I-5 was $Ir_{0.54}Ti_{0.46}O_2$.

TEM test analysis showed that the particle size of CAT-I-5 was 4-7nm.

## Example I-6. Preparation of Catalyst $Ir_{0.70}Ti_{0.30}O_2$

The catalyst was prepared by referring to Example 1-4, except that:

the iridium source was replaced by 3.64 mmol of potassium chloroiridate, the titanium source was replaced by 1.56 mmol of titanium oxysulfate; and the citric acid was replaced by 7.8 mmol of malic acid as a complexing agent.

the calcination conditions were adjusted as follows: the temperature was increased to 370°C at a rate of 5°C /min and maintained for 1.5 h.

The obtained catalyst product was denoted as CAT-I-6.

From XRF test analysis, it could be seen that the schematic chemical composition of CAT-I-6 was $Ir_{0.70}Ti_{0.30}O_2$.

TEM test analysis showed that the particle size of CAT-I-6 was 3-8nm.

### Example I-7. Preparation of Catalyst $Ir_{0.70}Ti_{0.30}O_2$

The catalyst was prepared by referring to Example I-4, except that:
10.4 mmol of citric acid was weighed, and the total molar ratio of the complexing agent to the iridium source and the titanium source was 2:1. The rest of the process was the same as in Example I-4. The obtained catalyst product was denoted as CAT-I-7.

From XRF test analysis, it could be seen that the schematic chemical composition of CAT-I-7 was $Ir_{0.70}Ti_{0.30}O_2$.

TEM test analysis showed that the particle size of CAT-I-7 was 4-9nm.

### Comparative Example I-1

A commercial iridium dioxide catalyst was used, which was purchased from Sigma Aldrich Company, product number 206237, and denoted as D-I-1.

### Comparative Example 1-2

The catalyst was prepared by referring to Example I-1, except that:
no citric acid complexing agent was added, and the rest of the process was the same as in Example I-1; the obtained catalyst product was denoted as D-I-2.

From XRF test analysis, it could be seen that the schematic chemical composition of D-I-2 was $Ir_{0.40}Ti_{0.60}O_2$.

From the XRD spectra shown in Fig. 2, it can be seen that the catalysts of Comparative Examples I-1 and I-2 both show obvious crystalline phase peaks, wherein the crystalline phase peaks at 28.0° and 34.2° correspond to the (110) and (101) crystalline planes of $IrO_2$ respectively; whereas the catalysts of Examples I-1 to I-4 show neither the crystalline phase peak of $IrO_2$ nor the crystalline phase peak of titanium oxide, but only the peak envelope in the 20 range of 30-35°, indicating that the iridium and titanium oxides therein are in an amorphous form (i.e., non-crystalline).

The catalysts prepared in the above examples and comparative examples were analyzed, wherein $M_1$ (Ir/Ti molar ratio) obtained by XPS analysis, $M_2$ (Ir/Ti molar ratio) obtained by XRF analysis, $M_0$ ($M_1/M_2$), $Q_0$ and electrochemical performance test data (overpotential, denoted as G, test current density 10 mA/cm$^2$) were listed in the following Table I-1.

Table I-1 Analysis results of catalysts obtained in Examples and Comparative Examples

| catalyst | CAT-I-1 | CAT-I-2 | CAT-I-3 | CAT-I-4 | CAT-I-5 | CAT-I-6 | CAT-I-7 | D-I-1 | D-I-2 |
|---|---|---|---|---|---|---|---|---|---|
| Particle size (nm) | 5-10 | 3-8 | 2-5 | 3-7 | 4-7 | 3-8 | 4-9 | - | >100 |
| $M_1$ | 0.82 | 1.28 | 2.32 | 3.20 | 1.70 | 3.06 | 2.95 | - | 0.54 |
| $M_2$ | 0.68 | 1.02 | 1.50 | 2.31 | 1.17 | 2.32 | 2.32 | - | 0.67 |
| $M_0$ | 1.21 | 1.25 | 1.55 | 1.39 | 1.45 | 1.32 | 1.27 | - | 0.81 |
| $Q_0$ | 0.35 | 0.40 | 0.37 | 0.36 | 0.41 | 0.39 | 0.35 | 0.16 | 0.10 |
| G/mV | 248 | 240 | 239 | 238 | 230 | 235 | 243 | 260 | 404 |

According to the data in Table I-1, it can be seen that:
compared with D-I-1 (existing commercial iridium dioxide catalyst), the catalysts CAT-I-1 to CAT-I-7 prepared by the method provided in the present application have higher $Q_0$ and lower overpotential, indicating that the distribution ratio of surface active species Ir(III) of CAT-I-1 to CAT-I-7 is higher and the oxygen evolution activity is higher; and compared with the iridium dioxide catalyst, the catalyst provided in the present application can effectively reduce the usage amount of precious metal iridium.

Compared with D-I-2 (no complexing agent was added during the preparation process), the catalysts CAT-I-1 to CAT-I-7 prepared by the method provided in the present application have a smaller particle size, indicating that the method provided in the present application can effectively improve the dispersion and avoid particle aggregation; and the $M_0$ of CAT-I-1 to CAT-I-7 is higher, indicating that the catalyst surface is richer in iridium; CAT-I-1 to CAT-I-7 have a higher $Q_0$ and a lower overpotential, indicating that the distribution ratio of active species Ir(III) in the surface of CAT-I-1 to CAT-I-7 is higher and the oxygen evolution activity is higher.

Furthermore, by comparing CAT-I-1 with CAT-I-2 to CAT-I-5 (using the same type of preparation raw materials), it can be seen that during the preparation process, CAT-I-2 to CAT-I-5 meets the molar ratio of iridium source calculated as iridium to titanium source calculated as titanium of 1-2.3:1, and CAT-I-2 to CAT-I-5 have higher $M_0$ and $Q_0$ and lower overpotential, indicating that the surface of CAT-I-2 to CAT-I-5 catalysts is richer in iridium, the distribution ratio of surface active species Ir(III) is higher, and the oxygen evolution activity is higher.

By comparing CAT-I-4 with CAT-I-7, it can be seen that during the preparation process, CAT-I-4 satisfies "the total molar ratio of the complexing agent to the iridium source and the titanium source was 1.3-1.8:1". The particle size of CAT-I-4 is smaller, $M_1$, $M_0$ and $Q_0$ are higher, and the overpotential is lower, indicating that the surface of the CAT-I-4 catalyst is richer in iridium, the distribution ratio of the surface active species Ir(III) is higher, and the oxygen evolution activity is higher.

**Example II series**

The following Example II series is used to illustrate the preparation and use of the iridium-niobium composite catalyst according to the present application. The raw materials used in the Example II series were all obtained through commercial channels, and were analytically pure unless otherwise specified. Chloroiridic acid or alkali metal chloroiridates was prepared into an aqueous solution with a concentration of 0.182 mol/L for use, and could also be prepared into a solution with a higher concentration for use. Niobium pentachloride was prepared into an organic solution with a concentration of 0.185 mol/L for use. The purity of citric acid was analytically pure.

**Example II-1. Preparation of catalyst $Ir_{0.5}Nb_{0.5}O_{2.25}$**

(1) 20 mL (3.64 mmol) of chloroiridic acid aqueous solution was taken, 1.05 g of citric acid (first complexing agent, 5.47 mmol) was weighed, they were stirred at 50°C to fully mix the citric acid and chloroiridic acid, a certain amount of $Na_2CO_3$ was added to adjust the solution to about pH=8; wherein the molar ratio of the first complexing agent to the iridium source calculated as iridium was 1.5:1;

(2) 19.7 mL (3.64 mmol) of niobium pentachloride ethanol solution was taken, 1.05 g of citric acid (second complexing agent, 5.47 mmol) was added hereinto, the mixture was stirred at 50°C to allow the citric acid and niobium chloride to be fully mixed, and then it was adjusted to about pH=8 with $Na_2CO_3$ solution again; wherein the molar ratio of the second complexing agent to the niobium source calculated as niobium was 1.5:1;

in the above steps, the molar ratio of the iridium source calculated as iridium to the niobium source calculated as niobium was 1:1;

(3) the aqueous solution of step 1 was added to the ethanol solution of step 2, the mixture was stirred at 50°C for half an hour, then added by a certain amount of sodium carbonate solution to control the pH of the solution to 8-9, and then stirred for another 3 hours;

(4) after being cooled, the solution was spin-dried at 70°C and placed in an oven at 120°C for drying overnight;

(5) After the catalyst was taken out and cooled, it was ground and placed flat on a porcelain boat, in an oxygen atmosphere, the temperature was increased to 400°C at a rate of 2°C /min and maintained for 2 h.

(6) after being cooled to room temperature, the catalyst was washed with a 1:1 solvent mixture of ethanol and water and centrifuged three times (pH test paper showed to be neutral), and the centrifuge tube with the catalyst was placed in a freeze drying oven (-20°C) to be dried overnight. The resulting catalyst product was denoted as CAT-II-1.

From XRF test analysis, it could be seen that the schematic chemical composition of CAT-II-1 was $Ir_{0.5}Nb_{0.5}O_{2.25}$.

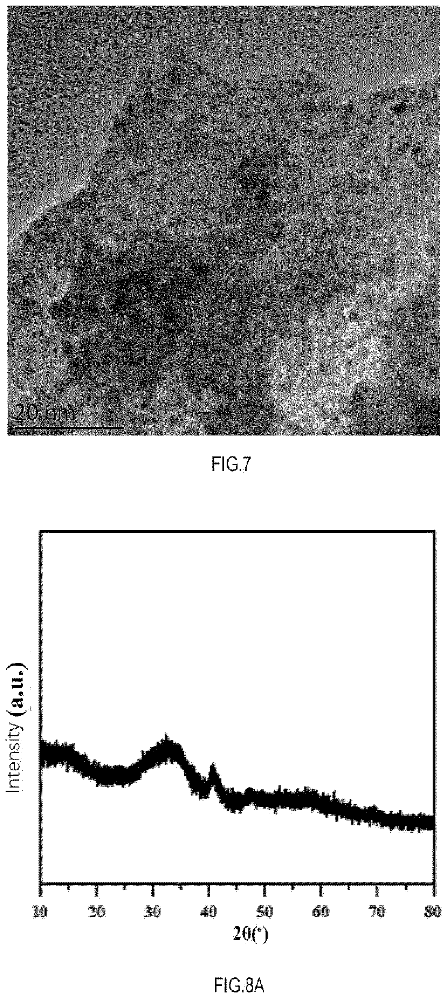

The TEM electron microscope photo of CAT-II-1 is shown in Fig. 7, wherein the particle size is uniform and can reach nanometer size. According to TEM test, the particle size of CAT-II-1 is 2-5nm.

BET analysis showed that the BET specific surface area of CAT-II-1 was 72.3 $m^2$/g.

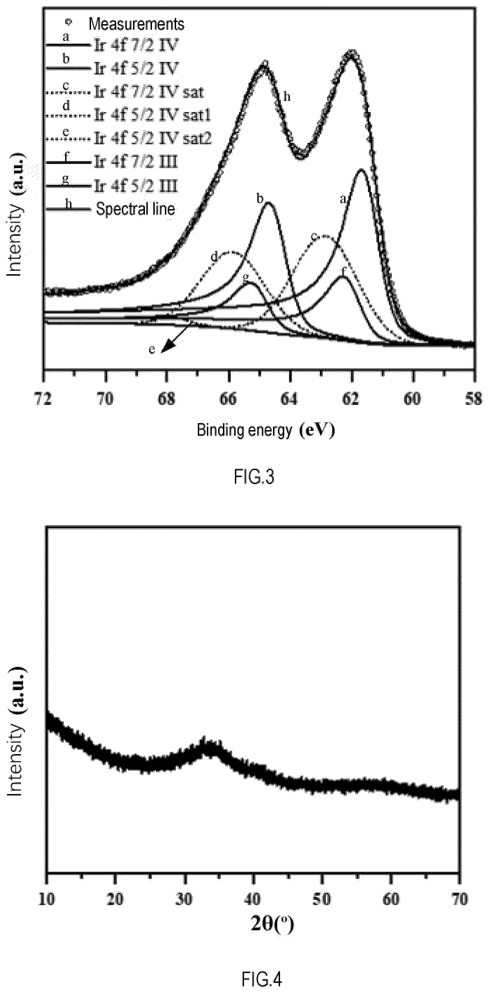

The XRD spectrum of CAT-II-1 is shown in Fig. 4. it can be seen from Fig. 4 that the XRD spectrum of CAT-II-1 does not contain the crystalline phase peaks of $IrO_2$ and niobium oxide, but contains a peak envelope only in the $2\theta$ range of 25-40°, indicating that the iridium and niobium oxides therein are in an amorphous form.

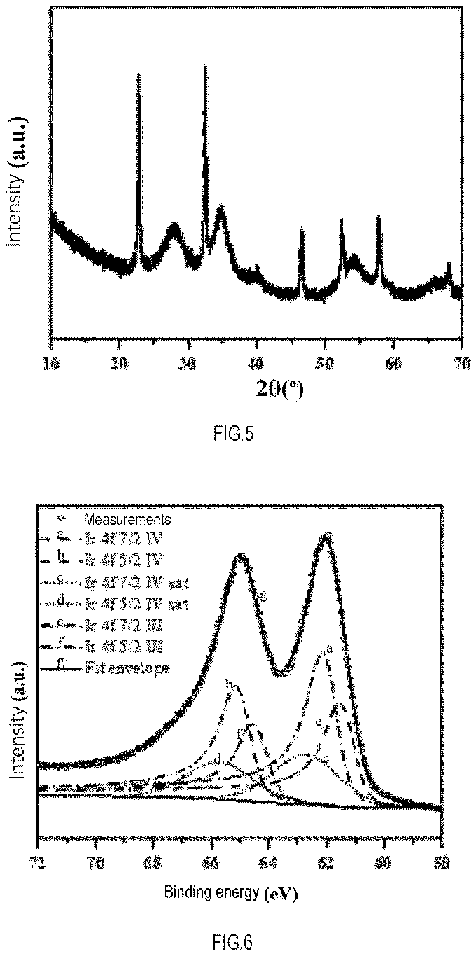

The XPS spectrum of CAT-II-1 is shown in Fig. 6. It can be seen from Fig. 6 that CAT-II-1 has active species Ir(III) in the surface. The specific values of $Q_0$ of XPS are listed in Table II -1.

## Example II-2. Preparation of catalyst $Ir_{0.6}Nb_{0.4}O_{2.2}$

(1) 20 mL (3.64 mmol) of chloroiridic acid aqueous solution was taken, 1.05 g of citric acid (first complexing agent, 5.47 mmol) was weighed, they were stirred at 50°C to fully mix the citric acid and chloroiridic acid, a certain amount of $Na_2CO_3$ was added to adjust the solution to about pH=8; the molar ratio of the first complexing agent to the iridium source calculated as iridium was 1.5:1;

(2) 13.1 mL (2.43 mmol) of niobium pentachloride ethanol solution was taken, 0.7 g of citric acid (second complexing agent, 3.64 mmol) was added hereinto, the mixture was stirred at 50°C to allow the citric acid and niobium chloride to be fully mixed, and then it was adjusted to about pH=8 with $Na_2CO_3$ solution again; wherein the molar ratio of the second complexing agent to the niobium source calculated as niobium was 1.5:1;

in the above steps, the molar ratio of the iridium source calculated as iridium to the niobium source calculated as niobium was 1.5:1;

(3) the aqueous solution of step 1 was added to the ethanol solution of step 2, stirred at 60°C for half an hour, then a certain amount of sodium carbonate solution was added to control the pH of the solution to 8-9, and then stirred for another 3 hours;

(4) after being cooled, the solution was spin-dried at 70°C and placed in an oven at 120°C for drying overnight;

(5) after the catalyst was taken out and cooled, it was ground and placed flat on a porcelain boat, in an oxygen atmosphere, the temperature was increased to 400°C at a rate of 2°C /min and maintained for 2 h.

(6) after being cooled to room temperature, the catalyst was washed with a 1:1 solvent mixture of ethanol and water and centrifuged three times (pH test paper detection showed to be neutral), and placed the centrifuge tube with the catalyst in a freeze drying oven (-20°C ) to be dried overnight. The resulting catalyst product was denoted as CAT-II-2.

From XRF test analysis, it could be seen that the schematic chemical composition of CAT-II-2 was $Ir_{0.6}Nb_{0.4}O_{2.2}$.

From TEM test and BET analysis, it could be seen that the particle size of CAT-II-2 was 2-4 nm and the BET specific surface area was 72.9 $m^2$/g.

## Example II-3. Preparation of Catalyst $Ir_{0.7}Nb_{0.3}O_{2.15}$

(1) 30 mL (5.46 mmol) of chloroiridic acid aqueous solution was taken, 1.58 g (8.22 mmol) of citric acid was weighed, they were stirred at 50°C to fully mix the citric acid and chloroiridic acid, a certain amount of $Na_2CO_3$ was added to adjust the solution to about pH=8; wherein the molar ratio of the first complexing agent to the iridium source calculated as iridium was 1.5:1;

(2) 12.6 mL (2.34 mmol) of niobium pentachloride ethanol solution was taken, 0.67 g of citric acid (second complexing agent, 3.49 mmol) was added, the mixture was stirred at 50°C to allow the citric acid and niobium chloride to be fully mixed, and then the solution was adjusted to about pH=8 with $Na_2CO_3$ solution; the molar ratio of the second complexing agent to the niobium source calculated as niobium was 1.5:1;

in the above steps, the molar ratio of the iridium source calculated as iridium to the niobium source calculated as niobium was 2.33:1;

(3) the aqueous solution of step 1 was added to the ethanol solution of step 2, stirred at 60°C for half an hour, then a certain amount of sodium carbonate solution was added to control the pH of the solution to 8-9, and then stirred for another 3 hours;

(4) after being cooled, the solution was spin-dried at 70°C and placed in an oven at 120°C for drying overnight;

(5) after the catalyst was taken out and cooled, it was ground and placed flat on a porcelain boat, in an oxygen atmosphere, the temperature was increased to 400°C at a rate of 2°C /min and maintained for 2 h;

(6) after being cooled to room temperature, the catalyst was washed with a 1:1 solvent mixture of ethanol and water and centrifuged three times (pH test paper detection showed to be neutral), and the centrifuge tube with the catalyst was placed in a freeze drying oven (-20°C ) to be dried overnight. The resulting catalyst product was denoted as CAT-II-3.

From XRF test analysis, it could be seen that the schematic chemical composition of CAT-II-3 was $Ir_{0.7}Nb_{0.3}O_{2.15}$.

From TEM test and BET analysis, it could be seen that the particle size of CAT-II-3 was 3-5 nm and the BET specific surface area was 74.5 $m^2$/g.

## Example II-4. Preparation of catalyst $Ir_{0.65}Nb_{0.35}O_{2.25}$

The catalyst was prepared by referring to Example II-1, except that:

3.64 mmol of chloroiridic acid aqueous solution was taken, 1.75 g of citric acid (first complexing agent, 9.10 mmol) was added, the molar ratio of the first complexing agent to the iridium source calculated as iridium was 2.5:1;
1.96 mmol of niobium pentachloride ethanol solution was taken, 0.75g of citric acid (second complexing agent, 3.9 mmol) was added, the molar ratio of the second complexing agent to the niobium source calculated as niobium was 2:1;
in the above steps, the molar ratio of the iridium source calculated as iridium to the niobium source calculated as niobium was 1.86:1;
the rest of the process was the same as Example II-1. The obtained catalyst product was denoted as CAT-II-4.

From XRF test analysis, it could be seen that the schematic chemical composition of CAT-II-4 was $Ir_{0.65}Nb_{0.35}O_{2.25}$.
From TEM test and BET analysis, it could be seen that the particle size of CAT-II-4 was 2-4 nm and the BET specific surface area was 71.2 $m^2/g$.

## Example II-5. Preparation of catalyst $Ir_{0.5}Nb_{0.5}O_{2.25}$

The catalyst was prepared by referring to Example II-1, except that:

The iridium source was replaced by potassium chloroiridate, and the first complexing agent was replaced by malic acid; the niobium source was replaced by ammonium niobate oxalate hydrate, and the second complexing agent was replaced by tartaric acid, and the number of moles added was the same as that of Example II-1;
the calcination conditions were adjusted as follows: the temperature was increased to 380°C at a rate of 2°C/min and maintained for 1 h;
the rest of the process was the same as in Example II-1. The obtained catalyst product was denoted as CAT-II-5.

From XRF test analysis, it could be seen that the schematic chemical composition of CAT-II-5 was $Ir_{0.5}Nb_{0.5}O_{2.25}$.
From TEM test and BET analysis, it could be seen that the particle size of CAT-II-5 was 2-4 nm and the BET specific surface area was 71.6 $m^2/g$.

## Comparative Example II-1

A commercial iridium dioxide catalyst was used, which was purchased from Sigma Aldrich Company, product number 206237, and denoted as D-II-1.

## Comparative Example II-2

The catalyst was prepared by referring to Example II-1, except that:
without adding the first complexing agent and the second complexing agent, the rest of the process was the same as that in Example II-1; the obtained catalyst product was denoted as D-II-2.
From XRF test analysis, it could be seen that the schematic chemical composition of D-II-2 was $Ir_{0.5}Nb_{0.5}O_{2.25}$.
From TEM test and BET analysis, it could be seen that the particle size of D-II-2 was 30-70 nm and the BET specific surface area was 21.2 $m^2/g$.
After XRD testing, as shown in Fig. 5, obvious crystalline phase peaks appear in the XRD spectrum of D-II-2. Wherein, the crystalline phase peak near 23° corresponds to the (001) crystalline plane of $Nb_2O_5$, and the crystalline phase peaks near 28° and 35° correspond to the (110) and (101) crystalline planes of $IrO_2$, respectively.
The catalysts obtained in the above examples and comparative examples were analyzed. $M_1$ (Ir/Nb molar ratio) obtained by XPS analysis, $M_2$ (Ir/Nb molar ratio) obtained by XRF analysis, $M_0$ ($M_1/M_2$), the particle size of catalyst particles, BET specific surface area, $Q_0$ and electrochemical performance test data (overpotential, denoted as G, test current density was 10 $mA/cm^2$) are listed in the following Table II-1.

Table II-1. Analysis results of catalysts obtained in Examples and Comparative Examples

| catalyst | CAT-II-1 | CAT-II-2 | CAT-II-3 | CAT-II-4 | CAT-II-5 | D-II-1 | D-II-2 |
|---|---|---|---|---|---|---|---|
| Particle size / nm | 2-5 | 2-4 | 3-5 | 2-4 | 2-4 | - | 30-70 |
| BET specific surface area / m$^2$/g | 72.3 | 72.9 | 74.5 | 71.2 | 71.6 | - | 21.2 |
| $M_1$ | 0.99 | 1.51 | 2.38 | 1.87 | 1.01 | - | 0.65 |
| $M_2$ | 1.00 | 1.52 | 2.32 | 1.85 | 1.01 | - | 1.00 |
| $M_0$ | 0.99 | 0.99 | 1.02 | 1.01 | 1.00 | - | 0.65 |
| $Q_0$/% | 50 | 53 | 54 | 53 | 52 | 16 | 14 |
| G/mV | 248 | 240 | 245 | 237 | 232 | 260 | 349 |

According to the data in Table II-1 above, we can see that:
Compared with D-II-1 (existing commercial iridium dioxide catalyst), the catalysts CAT-II-1 to CAT-II-5 prepared by the method provided in the present application have higher $Q_0$ and lower overpotential, indicating that the distribution ratio of surface active species Ir(III) of CAT-II-1 to CAT-II-5 is higher and the oxygen evolution activity is higher; and compared with the iridium dioxide catalyst, the catalyst provided in the present application can effectively reduce the usage amount of precious metal iridium.

Compared with D-II-2 (the first complexing agent and the second complexing agent are not added during the preparation process), the particle size of catalysts CAT-II-1 to CAT-II-5 prepared by the method provided in the present application is smaller, indicating that the method provided in the present application can effectively improve the dispersion and avoid particle aggregation; and the $M_0$ of CAT-II-1 to CAT-II-5 is closer to 1, indicating that the element dispersion on surface and the element dispersion in the bulk structure are more uniform, and the $M_1$ of CAT-II-1 to CAT-II-5 is higher, indicating that the catalyst surface is richer in iridium; CAT-II-1 to CAT-II-5 have higher $Q_0$ and lower overpotential, indicating that the distribution ratio of surface active species Ir(III) of CAT-II-1 to CAT-II-5 is higher and the oxygen evolution activity is higher.

Furthermore, by comparing CAT-II-4 with CAT-II-1 to CAT-II-3 (using the same type of preparation raw materials), it can be seen that during the preparation process, CAT-II-4 satisfies the following conditions: the molar ratio of the first complexing agent to the iridium source calculated as iridium is 2-3:1, the molar ratio of the second complexing agent to the niobium source calculated as niobium is 1.5-2.5:1, and the molar ratio of the iridium source calculated as iridium to the niobium source calculated as niobium was 1.5-2:1; compared with catalysts CAT-II-1 to CAT-II-3, catalyst CAT-II-4 has a lower overpotential and a higher oxygen evolution activity.

**Example III series**

The following Example III series is used to illustrate the preparation and use of the iridium-tantalum composite catalyst according to the present application. The raw materials used in the Example III series were all obtained through commercial channels, and were analytically pure unless otherwise specified. Wherein, chloroiridic acid or alkali metal chloroiridates was prepared into an aqueous solution with a concentration of 0.182 mol/L for use, and could also be prepared into a solution with a higher concentration for use. Tantalum pentachloride was prepared into an organic solution with a concentration of 0.279 mol/L for use. The purity of citric acid was analytically pure.

**Example III-1. Preparation of Catalyst $Ir_{0.5}Ta_{0.5}O_{2.25}$**

(1) 20 mL (3.64 mmol) of chloroiridic acid aqueous solution was taken, 1.05 g of citric acid (first complexing agent, 5.47 mmol) was weighed, they were stirred at 50°C to fully mix the citric acid and chloroiridic acid, a certain amount of $Na_2CO_3$ was added to adjust the solution to about pH=8; wherein the molar ratio of the first complexing agent to the iridium source calculated as iridium was 1.5:1;

(2) 13.1 mL (3.64 mmol) of tantalum pentachloride ethanol solution was taken, 1.05 g of citric acid (first complexing agent, 5.47 mmol) was added, the mixture was stirred at 50°C to allow the citric acid and tantalum chloride to be fully mixed, and then the solution was adjusted to about pH=8 with $Na_2CO_3$ solution; wherein the molar ratio of the second complexing agent to the tantalum source calculated as tantalum was 1.5:1;

in the above steps, the molar ratio of the iridium source calculated as iridium to the tantalum source calculated as tantalum was 1:1;

(3) the aqueous solution of step (1) was added to the ethanol solution of step (2), the solution was stirred at 60°C for half an hour, then a certain amount of sodium carbonate solution was added to control the pH of the solution to 8-9, and then stirred for another 3 hours;

(4) after being cooled, the solution was spin-dried at 70°C and placed in an oven at 120°C for drying overnight;

(5) after the catalyst was taken out and cooled, it was ground and laid flat on a porcelain boat, in an oxygen atmosphere, the temperature was increased to 370°C at a rate of 2°C /min and maintained for 2 h;

(6) after being cooled to room temperature, the catalyst was washed with a 1:1 solvent mixture of ethanol and water and centrifuged three times (pH test paper detection showed to be neutral), and the centrifuge tube with the catalyst was placed in a freeze drying oven (-10°C ) to be dried overnight. The resulting catalyst product was denoted as CAT-III-1.

From XRF test analysis, it could be seen that the schematic chemical composition of CAT-III-1 was $Ir_{0.5}Ta_{0.5}O_{2.25}$.

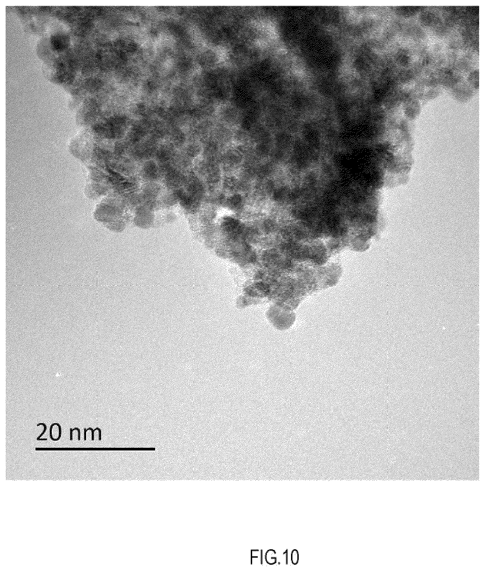

From TEM test and BET analysis, it could be seen that the particle size of CAT-III-1 was 2-5 nm and the BET specific surface area was 68.7 $m^2$/g. The TEM electron microscope photo of CAT-III-1 is shown in Fig. 10, from which it can be seen that the catalyst particles are uniform and have nanometer size.

From XRD analysis, it could be seen that, as shown in Fig. 8A, the catalyst CAT-III-1 shows peak envelopes only in the 2θ ranges of 25-35° as well as 40-41°, and does not show the crystalline phase peak of $IrO_2$ or the crystalline phase peak of tantalum oxide, indicating that the iridium tantalum oxides therein is in an amorphous form without obvious crystallization phenomenon.

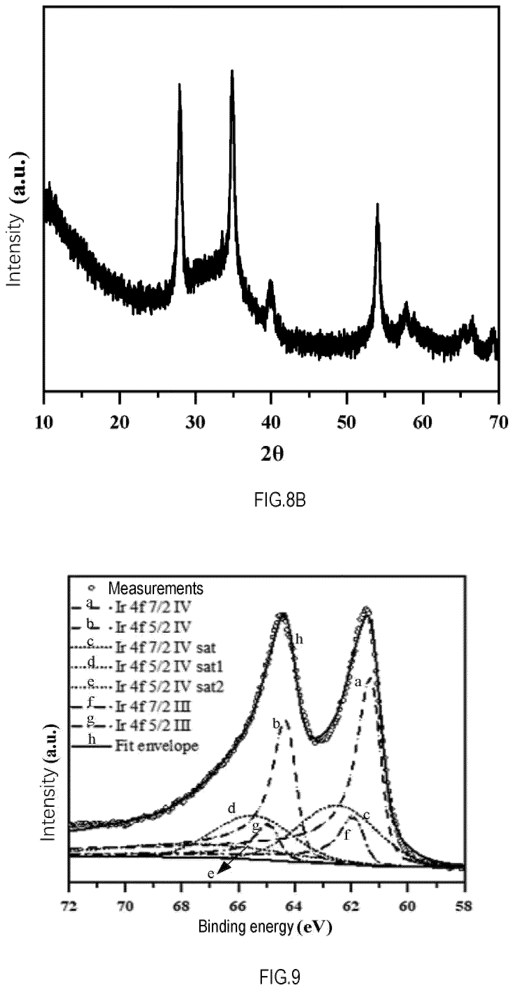

From XPS analysis, it can be seen that, as shown in Fig. 9, the Ir 4f characteristic peaks in the XPS spectrum of catalyst CAT-III-1 include Ir(IV) characteristic peaks and Ir(III) characteristic peaks, indicating that the catalyst has highly active Ir(lll) species.

## Example III-2. Preparation of Catalyst $Ir_{0.6}Ta_{0.4}O_{2.2}$

(1) 20 mL (3.64 mmol) of chloroiridic acid aqueous solution was taken, 1.05 g of citric acid (first complexing agent, 5.47 mmol) was weighed, they were stirred at 50°C to fully mix the citric acid and chloroiridic acid, a certain amount of $Na_2CO_3$ was added to adjust the solution to about pH=8; the molar ratio of the first complexing agent to the iridium source calculated as iridium was 1.5:1;

(2) 8.7 mL (2.43 mmol) of tantalum pentachloride ethanol solution was taken, 0.7 g of citric acid (second complexing agent, 3.64 mmol) was added, the mixture was stirred at 50°C to allow the citric acid and tantalum chloride to be fully mixed, and then was adjusted to about pH=8 with $Na_2CO_3$ solution; wherein the molar ratio of the second complexing agent to the tantalum source calculated as tantalum was 1.5:1;

in the above steps, the molar ratio of the iridium source calculated as iridium to the tantalum source calculated as tantalum was 1.5:1;

(3) the aqueous solution of step 1 was added to the ethanol solution of step 2, stirred at 60°C for half an hour, then a certain amount of sodium carbonate solution was added to control the pH of the solution to 8-9, and then stirred for another 3 hours;

(4) after being cooled, the solution was spin-dried at 70°C and placed in an oven at 120°C for drying overnight;

(5) after the catalyst was taken out and cooled, it was ground and placed flat on a porcelain boat, in an oxygen atmosphere, the temperature was increased to 400°C at a rate of 2°C /min and maintained for 2 h;

(6) after being cooled to room temperature, the catalyst was washed with a 1:1 solvent mixture of ethanol and water and centrifuged three times (pH test paper detection showed to be neutral), and the centrifuge tube with the catalyst was placed in a freeze drying oven (-10°C ) to be dried overnight. The resulting catalyst product was denoted as CAT-III-2.

From XRF test analysis, it could be seen that the schematic chemical composition of CAT-III-2 was $Ir_{0.6}Ta_{0.4}O_{2.2}$.

From TEM test and BET analysis, it could be seen that the particle size of CAT-III-2 was 3-6 nm and the BET specific surface area was 61.9 $m^2$/g.

## Example III-3. Preparation of Catalyst $Ir_{0.7}Ta_{0.3}O_{2.15}$

(1) 30 mL (5.46 mmol) of chloroiridic acid aqueous solution was taken, 1.58 g of citric acid (first complexing agent, 8.22 mmol) was weighed, they were stirred at 50°C to fully mix the citric acid and chloroiridic acid, a certain amount of $Na_2CO_3$ was added to adjust the solution to about pH=8; wherein the molar ratio of the first complexing agent to the iridium source calculated as iridium was 1.5:1;

(2) 8.4 mL (2.34 mmol) of tantalum pentachloride ethanol solution was taken, 0.67 g of citric acid (second complexing agent, 3.49 mmol) was added, the mixture was stirred at 50°C to allow the citric acid and tantalum chloride to be fully mixed, and then the solution was adjusted to about pH=8 with $Na_2CO_3$ solution; wherein the molar ratio of the second complexing agent to the tantalum source calculated as tantalum was 1.5:1;

in the above steps, the molar ratio of the iridium source calculated as iridium to the tantalum source calculated as tantalum was 2.33:1;

(3) the aqueous solution of step 1 was added to the ethanol solution of step 2, stirred at 60°C for half an hour, then a certain amount of sodium carbonate solution was added to control the pH of the solution to 8-9, and then stirred for another 3 hours;

(4) after being cooled, the solution was spin-dried at 70°C and placed in an oven at 120°C for drying overnight;

(5) after the catalyst was taken out and cooled, it was ground and placed flat on a porcelain boat, in an oxygen atmosphere, the temperature was increased to 400°C at a rate of 2°C /min and maintained for 2 h.

(6) after being cooled to room temperature, the catalyst was washed with a 1:1 solvent mixture of ethanol and water and centrifuged three times (pH test paper detection showed to be neutral), and the centrifuge tube with the catalyst was placed in a freeze drying oven (-10°C ) to be dried overnight. The resulting catalyst product was denoted as CAT-III-3.

From XRF test analysis, it could be seen that the schematic chemical composition of CAT-III-3 was $Ir_{0.7}Ta_{0.3}O_{2.15}$.

From TEM test and BET analysis, it could be seen that the particle size of CAT-III-3 was 4-7 nm and the BET specific surface area was 56.7 $m^2/g$.

### Example III-4. Preparation of Catalyst $Ir_{0.5}Ta_{0.5}O_{2.25}$

The catalyst was prepared according to Example III-1, except that:

iridium source was replaced with potassium chloroiridate, the first complexing agent was replaced with tartaric acid; the second complexing agent was replaced with malic acid, and the number of moles added was the same as that of Example III-1;

The calcination conditions were adjusted as follows: the temperature was increased to 400°C at a rate of 2°C /min and maintained for 1 h;

The rest of the process was the same as Example III-1. The obtained catalyst product was denoted as CAT-III-4.

From XRF test analysis, it could be seen that the schematic chemical composition of CAT-III-4 was $Ir_{0.5}Ta_{0.5}O_{2.25}$.

From TEM test and BET analysis, it could be seen that the particle size of CAT-III-4 was 3-5 nm and the BET specific surface area was 65.2 $m^2/g$.

### Example III-5. Preparation of Catalyst $Ir_{0.63}Ta_{0.37}O_{2.18}$

The catalyst was prepared according to Example III-1, except that:

5.46 mmol of chloroiridic acid aqueous solution was taken, 1.89 g of citric acid (first complexing agent, 9.83 mmol) was added, the molar ratio of the first complexing agent to the iridium source calculated as iridium was 1.8:1;

3.20 mmol of tantalum chloride ethanol solution was taken, 1.60g of citric acid (second complexing agent, 8.32mmol) was added, the molar ratio of the second complexing agent to the tantalum source calculated as tantalum was 2.6:1;

in the above steps, the molar ratio of the iridium source calculated as iridium to the tantalum source calculated as tantalum was 1.7:1;

the rest of the process was the same as Example III-1. The obtained catalyst product was denoted as CAT-III-5.

From XRF test analysis, it could be seen that the schematic chemical composition of CAT-III-5 was $Ir_{0.63}Ta_{0.37}O_{2.18}$.

From TEM test and BET analysis, it could be seen that the particle size of CAT-III-5 was 3-6 nm and the BET specific surface area was 60.7 $m^2/g$.

**Comparative Example III-1**

A commercial iridium dioxide catalyst was used, purchased from Sigma Aldrich Company, product number 206237, and denoted as D-III-1.

**Comparative Example III-2**

The catalyst was prepared by referring to Example III-1, except that:
the first complexing agent and the second complexing agent were not added, but the rest of the process was the same as that in Example III-1; the obtained catalyst product was denoted as D-III-2. Its XRD spectrum is shown in Fig. 8B.
From XRF test analysis, it could be seen that the schematic chemical composition of D-III-2 was $Ir_{0.5}Ta_{0.5}O_{2.25}$.
From TEM test and BET analysis, it could be seen that the particle size of D-III-2 was 30-80 nm and the BET specific surface area was 28.2 $m^2$/g. The TEM electron microscope photo of D-III-2 showed that the particles of the product D-III-2 were agglomerated in large pieces.
As can be seen from Fig. 8B, the catalyst obtained in Comparative Example III-2 shows obvious crystalline phase peaks, among which the crystalline phase peaks near $2\theta$ of 28° and 35° correspond to the (110) and (101) crystalline planes of $IrO_2$, respectively.
The catalysts obtained in the above examples and comparative examples were analyzed; the particle size, BET specific surface area, $M_1$ (Ir/Ta, XPS), $M_2$ (Ir/Ta, XRF), $M_0$ ($M_1/M_2$), $Q_0$ and electrochemical performance test data (overpotential, denoted as G, test current density of 10 mA/$cm^2$) of the obtained catalyst particles are listed in the following Table III-1.

Table III-1. Analysis results of catalysts obtained in Examples and Comparative Examples

| catalyst | CAT-III-1 | CAT-III-2 | CAT-III-3 | CAT-III-4 | CAT-III-5 | D-III-1 | D-III-2 |
|---|---|---|---|---|---|---|---|
| Particle size/nm | 2-5 | 3-6 | 4-7 | 3-5 | 3-6 | - | 30-80 |
| BET specific surface area/ $m^2$/g | 68.7 | 61.9 | 56.7 | 65.2 | 60.7 | - | 28.2 |
| $M_1$ | 1.01 | 1.52 | 2.33 | 1.00 | 1.70 | - | 0.85 |
| $M_2$ | 1.00 | 1.52 | 2.28 | 1.01 | 1.71 | - | 1.00 |
| $M_0$ | 1.01 | 1.00 | 1.02 | 0.99 | 0.99 | - | 0.85 |
| $Q_0$ | 0.22 | 0.23 | 0.27 | 0.25 | 0.28 | 0.16 | 0.07 |
| G/mV | 253 | 252 | 245 | 252 | 240 | 260 | 386 |

According to the data in Table III-1 above, it can be seen that:
Compared with D-III-1 (existing commercial iridium dioxide catalyst), the catalysts CAT-III-1 to CAT-III-5 prepared by the method provided in the present application have higher $Q_0$ and lower overpotential, indicating that the distribution ratio of surface active species Ir(III) of CAT-III-1 to CAT-III-5 is higher and the oxygen evolution activity is higher; and compared with the iridium dioxide catalyst, the catalyst provided in the present application can effectively reduce the usage amount of precious metal iridium.
Compared with D-III-2 (the first complexing agent and the second complexing agent were not added during the preparation process), the catalysts CAT-III-1 to CAT-III-5 prepared by the method provided in the present application have a smaller particle size, indicating that the method provided in the present application can effectively improve the dispersion and avoid particle aggregation; and the $M_0$ of CAT-III-1 to CAT-III-5 is closer to 1, indicating that the element dispersion on surface and the element dispersion in the bulk structure are more uniform, and the $M_1$ of CAT-III-1 to CAT-III-5 are higher, indicating that the catalyst surface is richer in iridium; CAT-III-1 to CAT-III-5 have a higher $Q_0$ and a lower overpotential, indicating that the distribution ratio of the surface active species Ir(III) of CAT-III-1 to CAT-III-5 is higher and the oxygen evolution activity is higher.
Furthermore, by comparing CAT-III-1 to CAT-III-3 with CAT-III-5 (using the same type of preparation raw materials), it can be seen that during the preparation process, CAT-III-5 satisfies the following conditions: the molar ratio of the first complexing agent to the iridium source calculated as iridium is 1.7-2.4:1; the molar ratio of the second complexing agent to the tantalum source calculated as tantalum is 2-3.2:1; the molar ratio of the iridium source calculated as iridium to the tantalum source calculated as tantalum is 1.22-1.94:1. Compared with CAT-III-1 to CAT-III-3, CAT-III-5 has a higher $Q_0$ and a lower overpotential, indicating that CAT-III-5 has a higher distribution ratio of the surface active species Ir(III) and a higher oxygen evolution activity.

**Example III-6. Preparation of Membrane Electrode**

(1) After being cleaned, the Nafion 117 proton exchange membrane was cut into a size of 7×7 cm$^2$, and the actual spraying area was 5×5 cm$^2$;

(2) 100 mg of the prepared CAT-III-3 catalyst was weighed, 14 mL of isopropanol and 6 mL of ultrapure water were added, then 200 mg of 5 wt% Nafion solution was added, and ultrasonicated for 40 min in an ice bath at an ultrasonic power of 900 W;

(3) 100 mg of 40 wt% Pt/C catalyst was weighed, 14 mL of isopropanol and 6 mL of ultrapure water were added, then 500 mg of 5 wt% Nafion solution was added, and ultrasonicated for 30 min in an ice bath at an ultrasonic power of 600 W;

(4) the Nafion 117 membrane was laid flat on a vacuum absorbing platform, the mold was pressed on it, the temperature of the vacuum absorbing platform was set to 85°C, and the slurries prepared in steps (2) and (3) were sprayed on both sides of the Nafion 117 membrane in the order of anode first and cathode later;

(5) the sprayed membrane electrode was placed into a hot press for hot pressing; the hot pressing temperature was set to 120°C, the hot pressing pressure was 3 bar, and the hot pressing time was 2 min to obtain the target membrane electrode.

The preferred embodiments of the present application are described in detail above in conjunction with the Figures; however, the present application is not limited to the specific details in the above embodiments; within the technical concept of the present application, a variety of simple modifications can be made to the technical solution of the present application, and these simple modifications all fall within the protection scope of the present application.

It should also be noted that the various specific technical features described in the above specific embodiments can be combined in any suitable manner without contradiction. In order to avoid unnecessary repetition, the present application will not further describe various possible combinations.

In addition, the various embodiments of the present application may be arbitrarily combined, as long as they do not violate the concept of the present application, they should also be regarded as the contents disclosed in the present application.

**Claims**

1. A transition metal-doped iridium-based composite catalyst, which is substantially composed of amorphous oxide of iridium and a transition metal, wherein the transition metal is selected from a metal of Group IVB, a metal of Group VB or a combination thereof, wherein, in terms of moles, the content ratio of iridium to the transition metal in the catalyst is (0.4-0.7): (0.3-0.6), and in the XRD spectrum of the catalyst, there is no diffraction peak corresponding to Iridium oxide in rutile phase, nor is there a diffraction peak corresponding to the crystalline phase of the transition metal oxide.

2. The iridium-based composite catalyst according to claim 1, wherein in the XRD spectrum of the catalyst, there is a peak envelope only in the 2θ range of 10-70°, preferably 20-50°.

3. The iridium-based composite catalyst according to claim 1 or 2, having a chemical composition as shown in the following formula: $Ir_xM_{1-x}O_y$, wherein M represents the transition metal, x is in the range of 0.4-0.7, and the value of y is such that the above chemical formula satisfies the principle of electrical neutrality, and preferably the transition metal is selected from titanium (Ti), niobium (Nb), tantalum (Ta) or a combination thereof.

4. The iridium-based composite catalyst according to claim 3, wherein:

the catalyst has a chemical composition represented by the formula $Ir_xTi_{1-x}O_y$, wherein x is in the range of 0.4-0.7, and the value of y is such that the above chemical formula satisfies the principle of electrical neutrality;

the catalyst has a chemical composition represented by the formula $Ir_xNb_{1-x}O_y$, wherein x is in the range of 0.5-0.7, preferably 0.62-0.67, and the value of y is such that the above chemical formula satisfies the principle of electrical neutrality; or

the catalyst has a chemical composition represented by the formula $Ir_xTa_{1-x}O_y$, wherein x is in the range of 0.5-0.7, preferably 0.55-0.66, and the value of y is such that the above chemical formula satisfies the principle of electrical neutrality.

**5.** The iridium-based composite catalyst according to any one of claims 1 to 4, wherein:

the transition metal is titanium (Ti), and the XRD spectrum of the catalyst has a peak envelope only in the $2\theta$ range of 30-35°;
the transition metal is niobium (Nb), and the XRD spectrum of the catalyst has a peak envelope only in the $2\theta$ range of 25-40°; or
the transition metal is tantalum (Ta), and the XRD spectrum of the catalyst has peak envelopes only in the $2\theta$ ranges of 25-35° and 40-41°.

**6.** The iridium-based composite catalyst according to any one of claims 1 to 5, wherein the Ir 4f characteristic peak of the XPS spectrum of the catalyst includes an Ir(IV) characteristic peak and an Ir(III) characteristic peak, and the catalyst satisfies: the peak area of the Ir(III) characteristic peak of the XPS spectrum of the catalyst is denoted as $Q_1$, the peak area of the Ir(IV) characteristic peak is denoted as $Q_2$, $Q_1/(Q1+Q_2)$ is denoted as $Q_0$, and $Q_0$ is in the range of 0.2-0.6.

**7.** The iridium-based composite catalyst according to claim 6, wherein:

the transition metal is titanium (Ti), and $Q_0$ is in the range of 0.35-0.41;
the transition metal is niobium (Nb), and $Q_0$ is in the range of 0.50-0.54; or
the transition metal is tantalum (Ta), and $Q_0$ is in the range of 0.22-0.27.

**8.** The iridium-based composite catalyst according to any one of claims 1 to 7, the molar ratio of Ir to the transition metal as determined by XPS analysis of said catalyst is denoted as $M_1$, the molar ratio of Ir to the transition metal as determined by XRF analysis is denoted as $M_2$, and the ratio of $M_1/M_2$ is denoted as $M_0$, wherein:

the transition metal is titanium (Ti), and $M_0$ is in the range of 1.20-1.55;
the transition metal is niobium (Nb), and $M_0$ is in the range of 0.99-1.02; or
the transition metal is tantalum (Ta), and $M_0$ is in the range of 0.98-1.04.

**9.** The iridium-based composite catalyst according to any one of claims 1 to 8, wherein the catalyst is in the form of nanoparticle powder, the particle size of the powder particles is in the range of 1-10 nm, preferably the BET specific surface area of the powder particles is in the range of 50-80 $m^2/g$, and the proportion of micropore volume to total pore volume is 0-5%, preferably 0-3%.

**10.** A method for preparing the iridium-based composite catalyst according to any one of claims 1 to 9, comprising the following steps:

1) mixing an iridium source, a transition metal source, a complexing agent and a solvent, and reacting the resulting mixture at a pH of 6-10 to obtain reaction materials, wherein the transition metal is selected from a metal of Group IVB, a metal of Group VB and a combination thereof, preferably selected from titanium (Ti), niobium (Nb) or tantalum (Ta), and the complexing agent is selected from C3-C8 organic polyacids and soluble salts thereof, preferably selected from C4-C8 organic polyacids and soluble salts thereof, more preferably selected from citric acid, tartaric acid, malic acid, sodium citrate, sodium tartrate, sodium malate, or combinations thereof;
2) evaporating and removing the solvent in the reaction materials obtained in step 1) to obtain an iridium-based composite catalyst precursor; and
3) calcining the iridium-based composite catalyst precursor in an oxygen-containing atmosphere to obtain the iridium-based composite catalyst.

**11.** The method according to claim 10, wherein:

the iridium source is selected from chloroiridic acid, alkali metal chloroiridates or a combination thereof, preferably, the alkali metal chloroiridates are selected from potassium chloroiridate, sodium chloroiridate or a combination thereof;
the transition metal source is selected from a titanium source, a niobium source, a tantalum source or a combination thereof, wherein the titanium source is selected from a soluble titanium salt, preferably titanium sulfate, titanium oxysulfate or a combination thereof, the niobium source is selected from an alcohol-soluble niobium compound, preferably niobium pentachloride, ammonium niobate oxalate hydrate or a combination thereof, and the tantalum source is selected from an alcohol-soluble tantalum compound, preferably tantalum pentachloride; and

the solvent is selected from water, alcohols or a combination thereof.

12. The method according to claim 10 or 11, wherein:

the molar ratio of the iridium source calculated as iridium to the transition metal source calculated as transition metal is 0.5-2.5:1, preferably 1-2.3:1; and
the molar ratio of the complexing agent to the total amount of the iridium source and the transition metal source is 1-4:1, more preferably 1.3-3:1,
preferably, the transition metal source is a titanium source, and the molar ratio of the iridium source calculated as iridium to the titanium source calculated as titanium is 0.5-2.5:1, preferably 1-2.3:1; the molar ratio of the complexing agent to the total amount of the iridium source and the titanium source is 1-2: 1, more preferably 1.3-1.8:1.

13. The method according to claim 10 or 11, wherein said step 1) further comprises:

1A) mixing the iridium source, the first complexing agent and water to obtain a first mixture;
1B) mixing the transition metal source, the second complexing agent and an organic solvent to obtain a second mixture, wherein the organic solvent is miscible with water and has a boiling point in the range of room temperature to 120°C, and is preferably an alcohol solvent;
1C) adjusting the pH of the first mixture and the second mixture to 6-10 respectively; and
1D) mixing the first mixture with the second mixture after pH adjustment in step 1C), and further adjusting the pH of the obtained mixture to 6-10, and then obtaining the reaction materials through reaction;
the first complexing agent and the second complexing agent may be the same or different, and are each independently selected from C3-C8 organic polyacids and soluble salts thereof, preferably selected from C4-C8 organic polyacids and soluble salts thereof, and more preferably selected from citric acid, tartaric acid, malic acid, sodium citrate, sodium tartrate, sodium malate, or a combination thereof.

14. The method according to claim 13, wherein:

the transition metal is niobium (Nb), the molar ratio of the first complexing agent to the iridium source calculated as iridium is 1-4:1, preferably 2-3:1, the molar ratio of the second complexing agent to the niobium source calculated as niobium was 1-4:1, preferably 1.5-2.5:1, and the molar ratio of the iridium source calculated as iridium to the niobium source calculated as niobium was 1-2.33:1, preferably 1.7-2:1; or
the transition metal is tantalum (Ta), the molar ratio of the first complexing agent to the iridium source calculated as iridium is 1-4:1, preferably 1.7-2.4:1, the molar ratio of the second complexing agent to the tantalum source calculated as tantalum is 1-4:1, preferably 2.0-3.2:1, and the molar ratio of the iridium source calculated as iridium to the tantalum source calculated as tantalum is 1-2.33:1, preferably 1.22-1.94:1.

15. The method according to any one of claims 10 to 14, wherein the reaction conditions in step 1) include : temperature of 25-95°C, preferably 40-90°C, time of 0.5-6h, preferably 2-4h;

preferably, the reaction in step 1) is carried out at a pH of 8-9;
preferably, in step 1), the pH is adjusted by adding a pH adjuster, and the pH adjuster is preferably selected from sodium carbonate, sodium bicarbonate, sodium hydroxide, ammonia water, or a combination thereof.

16. The method according to any one of claims 10 to 15, wherein the calcination conditions in step 3) include: a calcination temperature of 350-550°C, preferably 370-450°C; and a calcination time of 1-4h, preferably 1.5-3h.

17. The method according to any one of claims 10 to 16, further comprising a step of washing the calcined product of step 3), wherein the solvent for washing is a mixed solution of alcohol and water, and the alcohol accounts for 10-95% by weight, preferably 30-60% by weight of the mixed solution;
preferably, the alcohol is selected from methanol, ethanol, n-propanol, isopropanol, or a combination thereof.

18. Use of the iridium-based composite catalyst according to any one of claims 1 to 9 as an oxygen evolution electrocatalyst in an electrochemical process.

19. A membrane electrode suitable for proton exchange membrane electrolysis of water, comprising a proton exchange membrane and a cathode catalyst layer and an anode catalyst layer respectively located on both sides of the proton exchange membrane, wherein the anode catalyst layer comprises an iridium-based composite catalyst according to any one of claims 1 to 9.

FIG.1

FIG.2

FIG.3

FIG.4

FIG.5

FIG.6

FIG.7

FIG.8A

FIG.8B

FIG.9

20 nm

FIG.10

<table>
<tr><td colspan="2"><b>INTERNATIONAL SEARCH REPORT</b></td><td>International application No.<br><b>PCT/CN2023/090798</b></td></tr>
</table>

**A.    CLASSIFICATION OF SUBJECT MATTER**

C25B11/093(2021.01)i;  C25B1/04(2021.01)i;  C25B1/02(2006.01)i;  B01J23/46(2006.01)i;  B01J37/04(2006.01)i

According to International Patent Classification (IPC) or to both national classification and IPC

**B.    FIELDS SEARCHED**

Minimum documentation searched (classification system followed by classification symbols)

C25B; B01J

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, CNKI: 非晶, 粉体, 过电势, 过电压, 过渡金属, 无定型, 无定形, 析氧, 铱, 钛, 钽, 铌, 络合, 配合, amorphous, powder, overpotential, oxygen evolution, transition metal, Ir, Iridium, Nb, niobium, Ta, tantalum, Ti, titanium, complex

**C.    DOCUMENTS CONSIDERED TO BE RELEVANT**

| Category* | Citation of document, with indication, where appropriate, of the relevant passages | Relevant to claim No. |
|---|---|---|
| X | JP 2004238697 A (DAISO CO., LTD. et al.) 26 August 2004 (2004-08-26)<br>description, paragraphs 9-10 and 16 | 1-9, 18-19 |
| X | CN 105386086 A (THE DOSHISHA) 09 March 2016 (2016-03-09)<br>description, paragraphs 36 and 55-60 | 1-9, 18-19 |
| X | JP 2007146215 A (DAISO CO., LTD.) 14 June 2007 (2007-06-14)<br>description, paragraphs 1 and 47-49 | 1-9, 18-19 |
| X | CN 103476970 A (THE DOSHISHA) 25 December 2013 (2013-12-25)<br>description, paragraphs 1 and 94-106 | 1-9, 18-19 |
| X | A. Di Blasi et al. "Preparation and Evaluation of RuO2–IrO2, IrO2–Pt and IrO2–Ta2O5 Catalysts for the Oxygen Evolution Reaction in an SPE Electrolyzer"<br>*Journal of Applied Electrochemistry,* Vol. volume 39, 06 September 2008 (2008-09-06), pages 191-196<br>ISSN: 0021-891X,<br>page 192, section 2.3, and section 2.6, and page 194, section 3.3 | 1-9, 18-19 |

☑ Further documents are listed in the continuation of Box C.          ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **10 July 2023** | **12 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/090798** |

### C. DOCUMENTS CONSIDERED TO BE RELEVANT

| Category* | Citation of document, with indication, where appropriate, of the relevant passages | Relevant to claim No. |
| --- | --- | --- |
| X | 贺冲等 (HE, Chong et al.). "Ta 含量对 Ti/IrO2-Ta2O5 电极电容性能影响 (Influence of Ta Contents on the Structure and Capacitive Performance of Ti/IrO2-Ta2O5 Electrodes)" 稀有金属材料与工程 (*Rare Metal Materials and Engineering*), Vol. 46, No. 9, 30 September 2017 (2017-09-30), pages 2589-2593 ISSN: 1002-185X,<br><br>page 2589, section 1, and page 2590, section 2.1, and figure 1 | 1-9, 18-19 |
| X | 罗彦兰等 (LUO, Yanlan et al.). "退火温度对 Ti/IrO2-Ta2O5 电极的结构和电容性能的影响 (Influence of Annealing Temperature on Structure And Capacitive Performance of Ti/Iro2-Ta2O5 Binary Oxide Coating)" 材料热处理学报 (*Transactions of Materials and Heat Treatment*), Vol. volume 38, No. 4, 30 April 2017 (2017-04-30), pages 25-31 ISSN: 1009-6264,<br><br>page 26, section 1.1 and section 2.1, and figure 1 | 1-9, 18-19 |
| A | CN 103797160 A (THE DOSHISHA) 14 May 2014 (2014-05-14) entire document | 1-19 |
| A | WO 2021108461 A1 (THE REGENTS OF THE UNIVERSITY OF CALIFORNIA) 03 June 2021 (2021-06-03) entire document | 1-19 |
| A | CN 112368073 A (JAPAN SCIENCE AND TECHNOLOGY AGENCY) 12 February 2021 (2021-02-12) entire document | 1-19 |
| A | CN 113668010 A (SHANXI YIBEILI TECHNOLOGY CO., LTD.) 19 November 2021 (2021-11-19) entire document | 1-19 |

Form PCT/ISA/210 (second sheet) (July 2022)

## INTERNATIONAL SEARCH REPORT
### Information on patent family members

International application No.

**PCT/CN2023/090798**

| Patent document cited in search report | | | Publication date (day/month/year) | Patent family member(s) | | | Publication date (day/month/year) |
|---|---|---|---|---|---|---|---|
| JP | 2004238697 | A | 26 August 2004 | JP | 3914162 | B2 | 16 May 2007 |
| CN | 105386086 | A | 09 March 2016 | EP | 3088569 | A1 | 02 November 2016 |
| | | | | EP | 3088569 | B1 | 03 January 2018 |
| | | | | WO | 2011070908 | A1 | 16 June 2011 |
| | | | | NO | 3088569 | T3 | 02 June 2018 |
| | | | | EP | 2535443 | A1 | 19 December 2012 |
| | | | | EP | 2535443 | A4 | 20 May 2015 |
| | | | | EP | 2535443 | B1 | 06 July 2016 |
| | | | | US | 2012247971 | A1 | 04 October 2012 |
| | | | | AU | 2010329192 | A1 | 12 July 2012 |
| | | | | AU | 2010329192 | B2 | 13 June 2013 |
| | | | | CA | 2783302 | A1 | 16 June 2011 |
| | | | | CA | 2783302 | C | 08 July 2014 |
| | | | | JP | 2011122183 | A | 23 June 2011 |
| | | | | JP | 5013438 | B2 | 29 August 2012 |
| | | | | CN | 102686783 | B | 25 November 2015 |
| JP | 2007146215 | A | 14 June 2007 | JP | 4771130 | B2 | 14 September 2011 |
| CN | 103476970 | A | 25 December 2013 | RU | 2013147642 | A | 27 April 2015 |
| | | | | RU | 2568546 | C2 | 20 November 2015 |
| | | | | JP | 4916040 | B1 | 11 April 2012 |
| | | | | JP | 2012201925 | A | 22 October 2012 |
| | | | | CA | 2831273 | A1 | 04 October 2012 |
| | | | | CA | 2831273 | C | 23 February 2016 |
| | | | | US | 2014054180 | A1 | 27 February 2014 |
| | | | | CL | 2013002745 | A1 | 25 April 2014 |
| | | | | WO | 2012133136 | A1 | 04 October 2012 |
| | | | | KR | 20140002749 | A | 08 January 2014 |
| | | | | KR | 101577664 | B1 | 15 December 2015 |
| | | | | ES | 2557194 | T3 | 22 January 2016 |
| | | | | EP | 2690200 | A1 | 29 January 2014 |
| | | | | EP | 2690200 | A4 | 19 March 2014 |
| | | | | EP | 2690200 | B1 | 07 October 2015 |
| | | | | AU | 2012234150 | A1 | 14 November 2013 |
| | | | | AU | 2012234150 | B2 | 02 July 2015 |
| | | | | CN | 103476970 | B | 06 July 2016 |
| CN | 103797160 | A | 14 May 2014 | RU | 2561565 | C1 | 27 August 2015 |
| | | | | EP | 2757179 | A1 | 23 July 2014 |
| | | | | EP | 2757179 | A4 | 20 May 2015 |
| | | | | EP | 2757179 | B1 | 10 August 2016 |
| | | | | WO | 2013038927 | A1 | 21 March 2013 |
| | | | | KR | 20140061523 | A | 21 May 2014 |
| | | | | KR | 101577668 | B1 | 15 December 2015 |
| | | | | JP | 5008043 | B1 | 22 August 2012 |
| | | | | JP | 2013060621 | A | 04 April 2013 |
| | | | | US | 2016168733 | A1 | 16 June 2016 |
| | | | | US | 2014231249 | A1 | 21 August 2014 |
| | | | | CN | 103797160 | B | 16 March 2016 |
| WO | 2021108461 | A1 | 03 June 2021 | US | 2023001402 | A1 | 05 January 2023 |
| CN | 112368073 | A | 12 February 2021 | EP | 3808449 | A1 | 21 April 2021 |

Form PCT/ISA/210 (patent family annex) (July 2022)

**INTERNATIONAL SEARCH REPORT**
Information on patent family members

International application No.

**PCT/CN2023/090798**

| Patent document cited in search report | | | Publication date (day/month/year) | Patent family member(s) | | | Publication date (day/month/year) |
|---|---|---|---|---|---|---|---|
| | | | | EP | 3808449 | A4 | 30 March 2022 |
| | | | | US | 2021371993 | A1 | 02 December 2021 |
| | | | | JPWO | 2019240200 | A1 | 15 July 2021 |
| | | | | WO | 2019240200 | A1 | 19 December 2019 |
| | | | | IN | 202127001035 | A | 10 September 2021 |
| CN | 113668010 | A | 19 November 2021 | CN | 113668010 | B | 21 March 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- IrO2-TiO2: A High-Surface-Area, Active, and Stable Electrocatalyst for the Oxygen Evolution Reaction. *ACS Catalysis*, 2019, vol. 9, 6974-6986
- Effect of preparation procedure of IrO2-Nb2O5 anodes on surface and electrocatalytic properties. *Journal of Applied Electrochemistry*, 2005, vol. 35, 925-924

- Preparation and evaluation of RuO2-IrO2, IrO2-Pt, IrO2-Ta2O5 catalysts for the oxygen evolution reaction in an SPE electrolyzer. *Journal of Applied Electrochemistry*, 2009, vol. 39, 191-196
- Synthesis, characterization and evaluation of IrO2 based binary metal oxide electrocatalysts for oxygen evolution reaction. *International Journal of Electrochemical Science*, 2012, vol. 7, 12064-12077